Europäisches Patentamt

European Patent Office

Office européen des brevets

(19)

(11) **EP 1 600 874 A2**

(12) **EUROPEAN PATENT APPLICATION**

(43) Date of publication:
**30.11.2005 Bulletin 2005/48**

(51) Int Cl.⁷: **G06F 17/60**

(21) Application number: **05253271.0**

(22) Date of filing: **27.05.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **28.05.2004 US 857400
28.05.2004 US 857526**

(71) Applicant: **Morgan Stanley
New York, NY 10036 (US)**

(72) Inventors:
• **Hurewitz, Barry Scott
New York, NY 1028 (US)**
• **Harvey, Vaughn
New York, NY 10014 (US)**

(74) Representative: **Freeman, Jacqueline Carol
W.P. THOMPSON & CO.
55 Drury Lane
London WC2B 5SQ (GB)**

(54) **Computer systems and devices**

(57)     Various embodiments of the present invention are generally directed to a system for determining the cost of an equity research department to service a client of the department. Different techniques to be employed by the system are disclosed. The first technique generally includes estimating the time spent by each analyst of the department servicing the client over a specified period of time. The time spent servicing the client may then be adjusted based on the compensation of the analysis provider (or providers) servicing the client. Then, the compensation-weighted time of each analyst provider that serviced the client may be summed to thereby arrive at an estimate of the time and cost to service the client. In the second technique, the standard cost per unit of the different types of client touch that the equity research department produces is estimated. Then, the number and type of client touches a particular client receives over a given period of time (e.g., three months, one year, etc.) can be determined and multiplied by the standard cost per touch for the different touch types of to arrive at the total cost of servicing the client over the time period.

SURVEY ANALYSTS

- Categorize consumption by tiered clients
- Estimate consumption by each category
- Estimate time spent with tiered vs non-tiered clients

10

FOR EACH ANALAST, SPREAD ESTIMATED PERCENTAGE OF TIME SERVICING TIERED CLIENTS ACROSS EACH CLIENT USE CATEGORY BASED ON ESTIMATED COLLECTIVE CONSUMPTION BY CLIENTS IN EACH CLIENT USE CATEGORY

14

FOR EACH ANALYST, SPREAD PERCENTAGE OF TIME SPENT COLLECTIVELY SERVICING CLIENTS IN EACH CLIENT USE CATEGORY ACROSS THE CLIENTS IN THE RESPECTIVE CLIENT USE CATEGORIES

16

CALCULATE COMPENSATION-WEIGHTED TIME FOR EACH ANALYST FOR EACH CLIENT

18

SUM THE COMP-WEIGHTED TIME PERCENTAGES FOR EACH ANALYST FOR EACH LISTED CLIENT

20

**Figure 1**

## Description

The invention relates to computer systems and devices for handling data and databases and providing user interfaces.

In one example such systems can be used for determining the cost of a securities research department to service a client of the department and other purposes.

## BACKGROUND

In the securities research industry, an equity research department generates intellectual property (research) that is provided or shared with a number of different parties. For example, the IP may be provided to portfolio managers of so-called "buy-side firms," i.e., institutional investors such as mutual funds, hedge funds, pension funds, etc. Also, the IP may be shared with, for example, the CEOs and CFOs of corporate clients. In addition, where the equities department is a department of a large brokerage or investment house, the IP may be shared with other constituents of the firm, such as traders, analysts, investment bankers, etc. Because the research is distributed to so many different parties, it is difficult to quantify the resources of the equity research department (which are mostly fixed costs) that are spent servicing each consumer of the IP.

Further complicating the ability to allocate costs of an equity research department to clients or other consumers of the equity research is the fact that the IP is distributed and consumed through many different channels. For example, the work product produced by an equity research department may comprise written publications (electronic or hardcopy), tailored or blast emails and voicemails, one-to-one meetings, conferences, seminars, corporate events, etc. The distribution and consumption channels for these various forms of work product vary. Therefore, it is difficult to track the production of these various forms of work product, as well as to track consumption of the work product. Accordingly, there exists a need for a system by which an equity research department can track or determine the costs of servicing a client of the firm.

Another issue facing the securities research industry is allocating the inherently limited resources of a research department to its customers. Typically, analysts of so-called "sell-side firms" largely determined the amount of service a particular client buy-side firm received from the sell-side firm. The analysts were typically given some guidance as to which clients were more important relative to others (such as in terms of profitability to the sell-side firm) in the assumption that more service resources would be allocated to those clients, but often the service levels were driven by other considerations, such as the ranking of the analyst. This often resulted in an inefficient allocation of resources by the research department. Accordingly, there exists a need for a system to optimize the allocations of resources of a securities research department.

Another key issue in the securities research industry is ability to react quickly to breaking financial news. In the financial services industry, the value of information decays rapidly. As a result, value for an investor can be created by compressing the response time by the investor (or a manager of the investor's assets) to important news. For example, if a company announces plans to enter bankruptcy protection, it may be valuable to an investor to quickly consider its positions on suppliers, creditors, customers and/or competitors of the bankrupt company in response to the news - before others can act on it. Determining the suppliers, creditors, customers and competitors of a company, however, in a rapid fashion - rapid enough to maximize or increase value to the investor - is not always possible. In the past, investors have relied on institutional knowledge of these interdependencies and relationships, or have relied on paper charts of the information. Such mechanisms are often inaccurate, outdated, cumbersome, static and/or incomplete. Therefore, there exists a need for a manner in which an investor can quickly and interactively navigate through an industry's supply chain to see key interdependencies and relationships between the spectrum of participants.

## SUMMARY

According to a first aspect of the invention there is provided a computer device comprising an activity based costing module that is programmed to estimate the cost per unit of client touches for an equity research department by:

allocating costs of support resources of the department over the period of time to the number of client touch types produced by the department over a period of time;
allocating costs of time of analysis providers of the department over the period of time to the client touch types;
estimating the cost of per unit of the one or more client touch types by, for each client touch type, dividing the sum of the costs for the client touch type by number of units of the client touch type to create a standard cost per unit for the one or more client touch types; and
allocating costs to the client based on the consumption of client touches by the client and the corresponding standard cost per unit for the client touch type consumed.

The system can be implemented as a computer device and/or a computer program.

Various embodiments of the first aspect of the present invention can be used in techniques for determining the cost of an equity research department to service a client of the department.

<u>Technique 1:</u> The first technique generally includes estimating the time spent by each analyst of the department servicing the client over a specified period of time. The time spent servicing the client may then be adjusted based on the compensation of the analysis provider (or providers) servicing the client. Then, the compensation-weighted time of each analyst provider that serviced the client may be summed to thereby arrive at an estimate of the time and cost to service the client.

According to various implementations, the estimate of the time spent by the analysts to service the client may be estimated based on results of a survey taken by the analysts. The survey may ask the analysts to (i) estimate time spent collectively servicing a number of listed clients of the department and the time spent collectively servicing non-listed clients of the department over the specified period of time; (ii) categorize the listed clients based on the client's consumption of the analyst's time into one of a number of client-use categories; and (iii) estimate the time spent by the analyst collectively servicing the listed clients for each client-use category over the specified period of time.

<u>Technique 2:</u> In the second technique, the standard cost per unit of the different types of client touch that the equity research department produces is estimated. The client touch types may include, for example, phone calls with a client, one-to-one or small group meetings with a client, tailored emails or voicemails sent to a client, blast emails or voicemails sent to a client, conferences or conference calls attended by a client, published documents (hardcopy or electronic) produced for client consumption, etc. Then, the number and type of client touches a particular client receives over a given period of time (e.g., three months, one year, etc.) can be determined and multiplied by the standard cost per touch for the different touch types to arrive at the total cost of servicing the client over the time period.

The process of estimating the cost per client touch may include the step of estimating the number of units of client touch types produced by the department over a period of time. Next, the costs of support resources of the department over the period of time are allocated to the client touch types. Costs of support resources that are directly related to a particular client touch are allocated to that touch. Support costs that cannot be directly related to a particular type of client touch type can be spread across all of the client touch types, such as on a pro rata basis.

Also, time spent by analysis providers of the department over the period of time performing various activities is determined. This may be accomplished by use of a survey and/or by using various touch-capture systems (e.g., phone logs, electronic mailing labels, calendar logs, conference tracking systems, email meters, etc.). The cost of the time spent by the analysis providers performing activities related to a particular client touch type is allocated to the particular client touch type. The cost of research time spent by the analysis providers over the period of time may be spread across all of the client touch types. In that way, the cost of time spent by the analysis providers performing research (e.g., conducting research and writing/editing research work product) is effectively treated as a research and development (R&D) expense of the department. Then, the cost per unit of the client touch types can be estimated by, for each client touch type, dividing the sum of the costs for the client touch type by number of units of the client touch type to generate a standard cost per unit for the client touch types. Finally, costs may be allocated to the clients based on their consumption of client touches and the corresponding standard cost per unit for the client touch type consumed.

In a second aspect, the present invention is directed to a system for allocating limited resources of a securities research department to accounts of the department. According to various embodiments, the system includes an account scoring module and a resource matching module. The account scoring module is for generating a score for each account, and the resource matching module is for matching the resources of the department to the accounts based on the scores for each account. The system may also include a forecasting module for estimating the financial (or economic) impact to the research department of making various resource allocations.

In various implementations, the resources of the securities research department to be matched to the accounts are analyst-contact relationships. The score is a way to represent the value of the account relative to other accounts based on attributes and the attributes' relative importance in being relevant in determining the account's value to the securities research department. The score of an account may be based on a hierarchical tree of categories and attributes. The account's score may be based on a weighted percentage average of the account's score in the categories. The account's score for each category may be based on a weighted percentage average of the account's ranking for each attribute related to the particular category. The attribute rankings may be, for example, percentile rankings.

The resource matching module may match the resources of the department to the accounts based on the scores for each account. The inventory (or available capacity) for each resource is input into the system. The resource matching module may match the resources of the department to the accounts by (i) distributing a number of points to each account based on the score of the account as determined by the account scoring module; (ii) spreading the points of each account across the resources of the firm that are of interest to the particular accounts; and (iii) matching the resources to the accounts based on the number of points allocated to the resource for each account. When a particular account has points allocated to a resource for which there is no remaining inventory, the points of the account allocated to that resource may be distributed to other resources of interest to the account for which there is remaining inventory.

The account scoring module may comprise means far compensating for attributes for which no data is available. This may be done by a computing device and/or a computer program which has means for detecting that data is unavailable for an attribute; and means for allocating compensatory data to that attribute. It may comprise means for calculating a sum of the percentage weightings of the attribute for which no data is available by said sum to form a compensating data weighting for the no-data attribute.

In another general aspect, various embodiments of the present invention are directed to an interactive user interface. The interface may include a first field and at least one additional field. The first field lists a focal item and the at least one additional field contains a listing of items related to the focal item. Certain of the related items in the at least one additional field include a hyperlink which, when activated by the user, causes the item corresponding to the activated hyperlink to become a new focal item listed in the first field, such that the at least one additional field transitions to list items related to the new focal item.

According to various implementations, the focal item may be an identifier corresponding to a company and the at least one additional field may contain a listing of identifiers corresponding to companies that are customers, suppliers or competitors of the focal item company. In this way, the user may interactively navigate through the supply chain for a company to ascertain, for example, key interdependencies that may be valuable in providing timely investing advice. For example, the user could navigate three or more derivatives up, down, or across the supply chain very quickly and discern the impact of market moves on players several orders down or upstream. In other variations, the focal item may be an economic indicator and the at least one additional field may list companies whose stock prices are known to be heavily affected by changes in the particular economic indicator.

In another general aspect, various embodiments of the present invention are directed to a system for providing the interactive user interface to the user. The system comprises a database for storing data about the items (e.g., companies) and a server in communication with the database. The server may serve a document containing the interactive user interface via a network to the user. The interactive user interface may include, as before, a first field and at least one additional field. The first field lists a focal item and the at least one additional field contains a listing of items related to the focal item. Certain of the related items in the at least one additional field include a hyperlink which, when activated by the user, causes the item corresponding to the activated hyperlink to become a new focal item listed in the first field, such that the at least one additional field transitions to list items related to the new focal item.

In general, various aspects of this invention have been described as systems and computer devices, as well as computer programs and computer program products. The corresponding methods and individual method steps for each aspect will be self-evident and do not need to be recited in detail here.

The skilled man will see that the present invention in many aspects provides technical solutions to technical problems and has inherently technical advantages. The invention has application and is useful and advantageous in commerce and thus has industrial application although it is not specifically applicable to manufacturing industry. Nonetheless the invention can be used to increase the speed and efficiency of computer systems in competitive commercial environments. Fur example, in some aspects the invention selves to enhance the efficiency and economy of databases and involves technical considerations such as the efficient and speedy handling of data, the organisation of computer systems and of databases and provides an improved management system and an efficient and useful user interface. Physical technical items such as parts of computer systems and devices form technical constructional components of the invention, as will be evident from the description of the inventive aspects as a whole.

The invention takes some inspiration from business considerations but has a technical character and comprises a technical implementation of a combination of technical and non-technical features in an inherently technical system. Both technical and non-technical features contribute to the technical character of the invention.

DESCRIPTION OF THE FIGURES

Embodiments of the present invention will be described by way of example in conjunction with the following figures, wherein

Figure 1 is a diagram of a process according to various embodiments of the present invention;
Figure 2 illustrates a survey to be used in the process of Figure 1 according to various embodiments of the present invention;
Figures 3a and 3b are diagrams of processes according to other embodiments of the present invention;
Figures 4a-4d illustrate a survey to be used in the processes of Figures 3a and 3b according to various embodiments of the present invention;
Figures 5 and 6 are diagrams of systems according to various embodiments of the present invention
Figure 7 is a diagram of a system according to various embodiments of the present invention;

Figure 8 is a diagram of a scoring scenario according to various embodiments of the present invention;

Figures 9-10 illustrate process flows of the resource matching module according to various embodiments of the present invention;

Figures 11 and 12 illustrate screen shots generated by the user interface according to various embodiments of the present invention;

Figures 13-15 and 17 are diagrams of an interactive user interface according to various embodiments of the present invention; and

Figure 16 is a diagram of a system according to various embodiments of the present invention.

DESCRIPTION

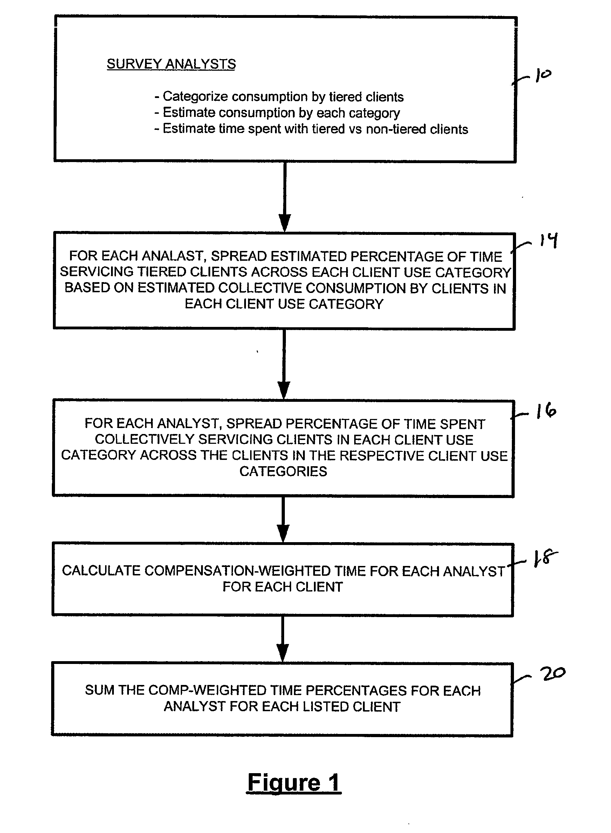

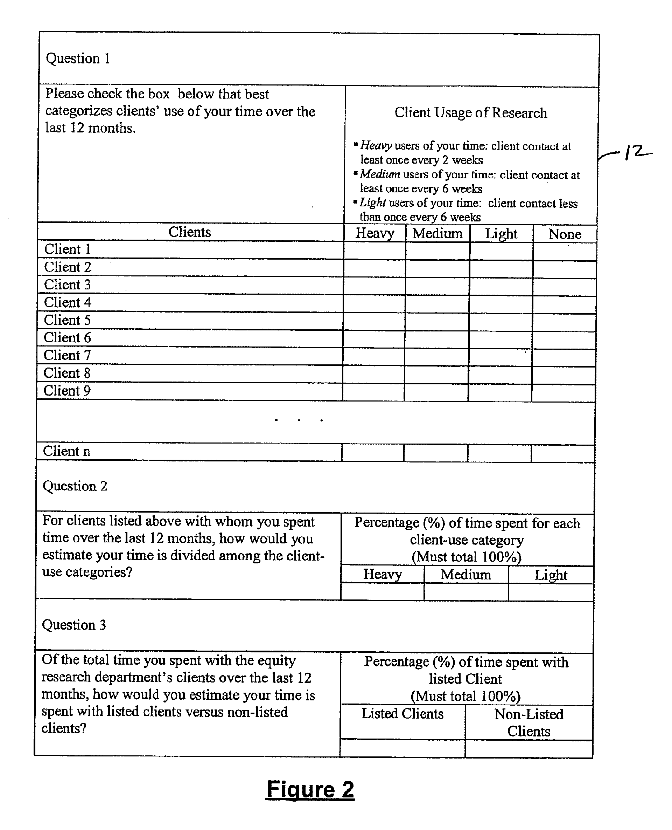

Figure 1 is a flowchart according to various embodiments of the present invention of a process for estimating the total time spent by analysts and/or analyst teams of an equity research department (or "firm") servicing particular buy-side clients and the cost of servicing the clients based on the clients' consumption of the analysts' time. The process starts at step 10, where analysts (preferably every analyst) of the equity research department complete a survey regarding the amount of time they spent servicing the department's clients. A sample survey 12 is shown in Figure 2. The analysts may complete the survey on-line, such as through an internal web-based application, for example, or they may complete hard copies of the survey by hand.

As can been seen in Figure 2, the survey 12 may first ask the analysts to categorize the consumption of their time for a number of the firm's clients over a particular time period (such as the preceding twelve months, for example). The clients listed in the survey may correspond to the first or top tier(s), or top *n* number (e.g., 150, 200, 250, etc.) of the firm's clients, in terms of, for example, revenue or profitability to the firm. The top tier(s) or top n number of clients may collectively account for certain percentage of the firm's revenues.

Any number of client-use categories to categorize the clients' consumption of the analysts' time may be used in the survey. In the illustrated example, four client-use categories are used: Heavy, Medium, Light and None (or immaterial). Further, the survey may provide the analysts with guidance as to what constitutes "Heavy" use of their time, "Medium" use, etc. For example, a client may be considered a "Heavy" user of an analyst's time if the analyst has contact with the client at least once every two weeks. A "contact" with a client may include, for example, an in-person conversation, a telephone call or teleconference, tailored e-mails and tailored voicemails, etc. A client may be considered a "Medium" user of an analyst's time if the analyst has contact with the client at least once every six weeks. A client may be considered a "Light" user of an analyst's time if the analyst has contact with the client less than every six weeks. A client may be considered an immaterial or non-user of the analyst's time if the analyst almost never has contact with the client. In other embodiments, different numbers of categories and/or different definitions of what constitutes a particular client-use category may be used.

The clients may be listed in the survey in a manner that does not bias or tends to minimize bias in the survey results. For example, the clients may be listed alphabetically. Also, for an on-line survey, the analyst may be required to categorize every one of the listed clients. If an analyst fails to categorize one or more clients, the on-line survey may prohibit the analyst from proceeding to the next question or successfully submitting the survey.

The survey 12 may further ask the analyst to estimate how much of his/her time spent servicing the listed (or tiered) clients was divided among the client's categorized according to the various client-use categories. For example, in the sample survey of Figure 2, the survey 12 may require the analyst to estimate how much of his/her time spent servicing the listed n clients was divided among Heavy users, Medium users and Light users. The survey may require, for example, that the sum for the Heavy, Medium and Light users equals 100%. Immaterial users may not be considered in this step, as their consumption of the analyst's time may be assumed to be insignificant.

In addition, the survey 12 may ask the analyst to estimate how much of his/her time was spent with the listed clients (e.g., the top n clients) versus non-listed clients. Again, the survey may require, for example, that the sum of the responses equals 100%.

Returning to the flowchart of Figure 1, after the analysts have completed the survey, the results are compiled and, at step 14, for each analyst, the estimated percentage of time spent by the analyst with listed clients (as opposed to time spent servicing non-listed clients) is spread across each client use category based on the estimated collective consumption of the analyst's time of the clients in each client-use category. For example, suppose analyst A estimates her total client time as follows:

- 80% of time spent with listed clients and 20% spent with non-listed clients;
- Of time spent with listed clients, 60% with Heavy users, 25% with Medium users and 15% with Light users; and

Thus, in this example, Analyst A spent 48% of her time with Heavy users (computed as 80% times 60%), 20% of her time with Medium users (computed as 80% times 25%), and 12% of her time with Light users (computed as 80% times 15%).

Next, at step 16, for each analyst, the percentage of time spent by the analyst collectively servicing the clients in each client use category is spread across each client in the respective client-use categories. Thus, for instance, assuming Analyst A categorized fifty (50) clients as Heavy users in the survey, seventy five (75) as Medium users, and one hundred fifty (150) as Light users, this results in an estimate of:

- 0.96% of Analyst A's time spent with each Heavy user (computed as 48% divided by 50);
- 0.27% of Analyst A's time spent with each Medium user (computed as 20% divided by 75); and
- 0.08% of Analyst A's time spent with each Light user (computed as 12% divided by 150).

At step 18, according to various embodiments, a weighted adjustment of analyst time is calculated for each client. The weighting, for example, may be based on the compensation of the analyst. In order to perform this step, for example, the percentage of compensation that each analyst comprises of the total compensation pool for all analysts may be calculated. Then, for each analyst, the estimated time that the analyst spends with each client may be multiplied by the analyst's compensation percentage. For example, assume Analyst A's compensation makes up 2% of the compensation of all analysts. Thus, the comp-weighted adjustment of Analyst A's time may be calculated as follows:

- multiply the estimated time for clients in Analyst A's Heavy use category (i.e., 0.96%) by 2% to arrive at a comp-weighted time percentage for Analyst A of 0.0192% for Heavy users;
- multiply the estimated time for clients in Analyst A's Medium use category (i.e., 0.26%) by 2% to arrive at a comp-weighted time percentage for Analyst A of 0.0052% for Medium users; and
- multiply the estimated time for clients in Analyst A's Light use category (i.e., 0.08%) by 2% to arrive at a comp-weighted time percentage for Analyst A of 0.0016% for Light users.

Then, at step 20, the comp-weighted time percentages for each analyst for each listed client may be summed to determine a comp-weighted consumption percentage for each listed client. As an example, assume Client 1 was rated a Heavy user by $p$ number of analysts, a Medium user by $q$ number of analysts, and a Light user by $r$ number of analysts. Further, assume that the sum of the comp-weighted adjusted time percentages for the $p$ analysts who categorized Client 1 as Heavy was 1.2%, the sum for the $q$ analysts who categorized Client 1 as Medium may be 0.4%, and the sum for the $r$ analysts who categorized Client I as Light may be 0.15%. These percentages are summed to arrive at a comp-weighted consumption percentage for Client 1 of 1.75%. This may be done for each of the $n$ clients. In this way, an estimate may be determined of how much of the department's analysts' time a particular client consumed, adjusted to compensate for the compensation of the respective analysts.

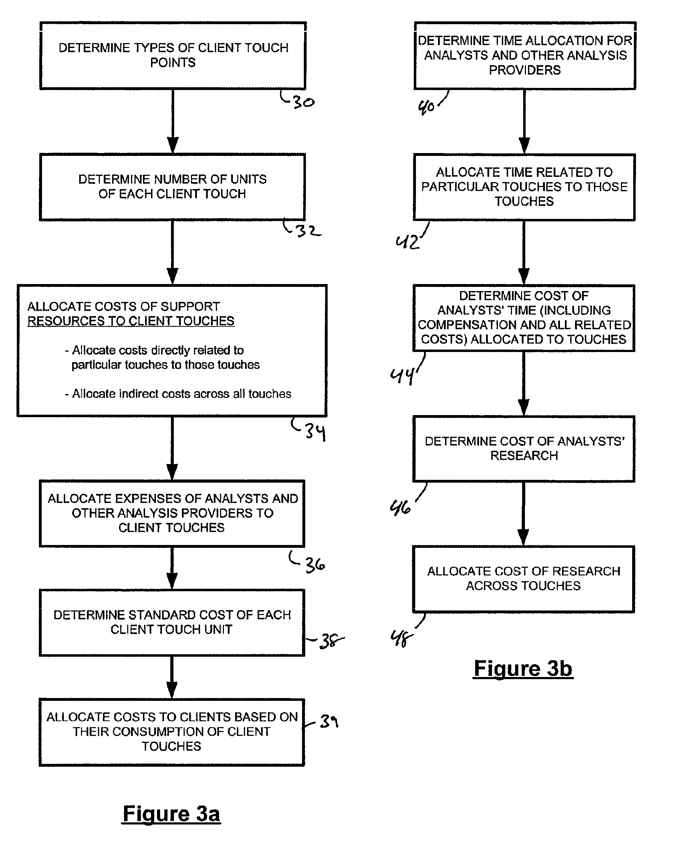

Figure 3a is a flowchart illustrating the second technique according to various other embodiments of the present invention. The second technique allocates the costs of the equity research department to units produced by the department in order to determine a standard cost per unit. The units involved may be, for example, client touches (or client touch points), i.e., the ways in which an equity research department communicates or otherwise services its clients. The process may start at step 30 where the types of client touch points are determined. For an equity research department, client touch points may include both scaleable touches (deliverable to numerous clients at once) and non-scaleable touches (deliverable to one or only a few clients at a time). Scaleable touches may include, for example, blast voice mails, conference calls, live conferences or other live events, published documents (hardcopy or electronic), web casts and blast e-mail messages. Non-scaleable touches may include, for example, analyst phone calls, one-to-one or small group meetings, tailored e-mail messages, tailored voice mail messages, management meetings, etc.

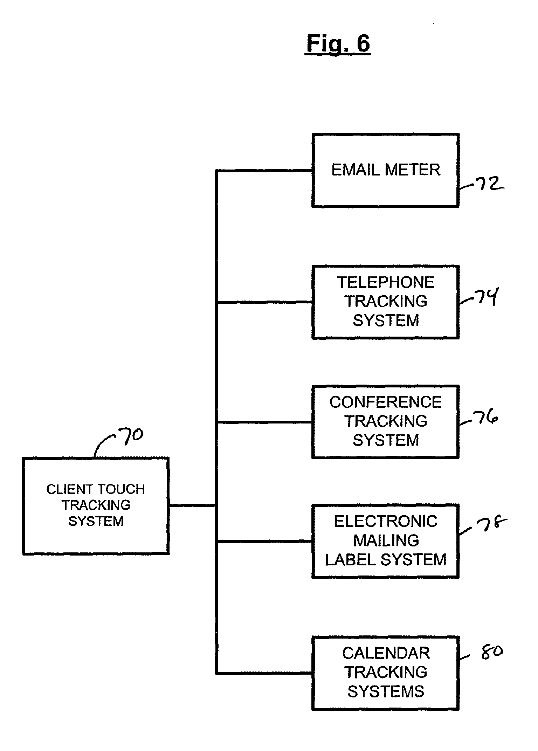

Next, at step 32, the number of units of each client touch type produced over a given time frame (e.g., per year, per quarter, etc.) is determined or estimated. The number of units may be determined by any available and/or practicable means. For example, a computerized system, as described in more detail below in connection with Figure 6, may track the number of client touches produced. The system may include telephone-tracking systems to track phone calls (both inbound and outbound) to clients. The telephone tracking system may track the number of calls, the parties, and/or the length of each call. Also, the client touch tracking system may include teleconferencing tracking services to track the number of and the participants in telephone conferences, as well as the length of the teleconferences. Also, email systems may be used to track the number of emails sent to clients (e.g., based on domain name extension). Further, publishing departments and/or research aggregation services may be used to track the number of hardcopy and/or electronic publications. In addition or in the alternative, surveys of analysts and other analyst providers may be used to estimate the number of units of each client touch type. Such a survey is described in more detail below. Other analysis providers for an equity research department, besides the analysts themselves, may include strategists, research associates, economists and accountants, for example.

Next, at step 34, the costs of support resources are allocated to client touches. Support resources may include management and other indirect costs. Support resources may also include any other costs besides the costs of the analysts' time, such as insurance, energy, rent, telephone, postage, printing, etc. The costs of support services directly related or identifiable to particular client touches may be directly allocated to those touches. That is. whenever possible support costs that can be directly identifiable with a particular type of touch are preferably directly allocated to that touch category. For example, the costs of a publishing division used for publishing hardcopy documents may be specifically allocated to hardcopy documents. Similarly, telephone costs may be directly allocated to telephone calls and/ or voicemails, for example, and so on.

The costs of support resources that cannot be directly linked to client touches (e.g., indirect costs) may be spread across all client touch types. These costs may be spread evenly across all of the client touch types or may be spread pro rata, for example. That is, for example, the most numerous and/or most time-consuming client touches may be allocated more of the indirect and management costs than less numerous or less time-consuming client touches. For example, if published documents (either hardcopy or electronic) account for 80% of client touches, 80% of the indirect and management costs may be allocated to the cost of published documents. For other types of client touches, the allocation may be made based on time consumption; more time consuming client touches may be allocated a greater percentage of the indirect and management costs than less time consuming client touches.

Next, at step 36, the expenses (including compensation) of the analysts and other analysis providers (e.g., strategists, research associates, economists, accountants) are aiiocated to the client touches. A process for this allocation, according to various embodiments, is shown in Figure 3b. The process of Figure 3b commences at step 40, where the time spent by the analysts and other analysis providers performing various activities tied to a touch category is determined or estimated. Any suitable technique for determining or tracking the time spent by analysts and other analysis providers in performing these activities may be used. For example, analysts and other analysis providers may record (electronically, for example) the time they spend on the various activities and those time entries may be compiled to determine the time spent on such activities.

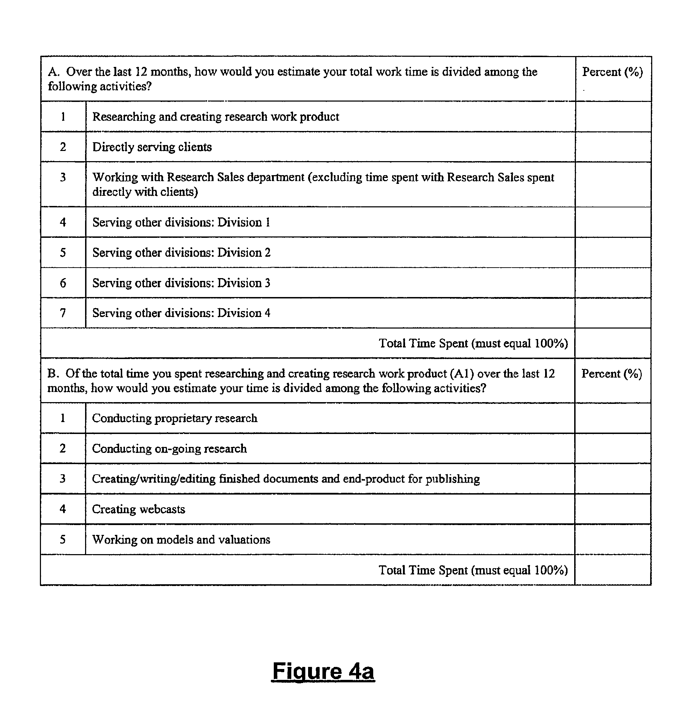

According to another technique, a survey of the analysts and other analysis providers may be conducted to ascertain an estimate of how much of their time the analysts and other analysis providers spend performing the various activities that relate to a specific touch category. Figures 4a - 4d illustrate a sample survey for estimating such time allocations, as well as estimating the number of units of client-touches. As can be seen in Figure 4a, the survey may ask the analysts and other analysis providers to estimate what percentage of their time they spend performing various activities, such as, for example, researching and creating work product, directly serving clients, working with research sales, and serving other constituents (such as other divisions of the firm). Time spent serving other constituents may be allocated to those constituents and not allocated to a touch category. The questions of the survey may be designed so all work-related time of the analysts and other analysis providers can be considered to belong to at least one of the activities. Further, of the time that an analyst or other analysis provider spends researching and creating work product, the survey may ask what percentage of the time is spent, for example, conducting proprietary research, conducting on-going research, creating/writing/editing documents for publishing, creating web casts, and working on modeis and valuations.

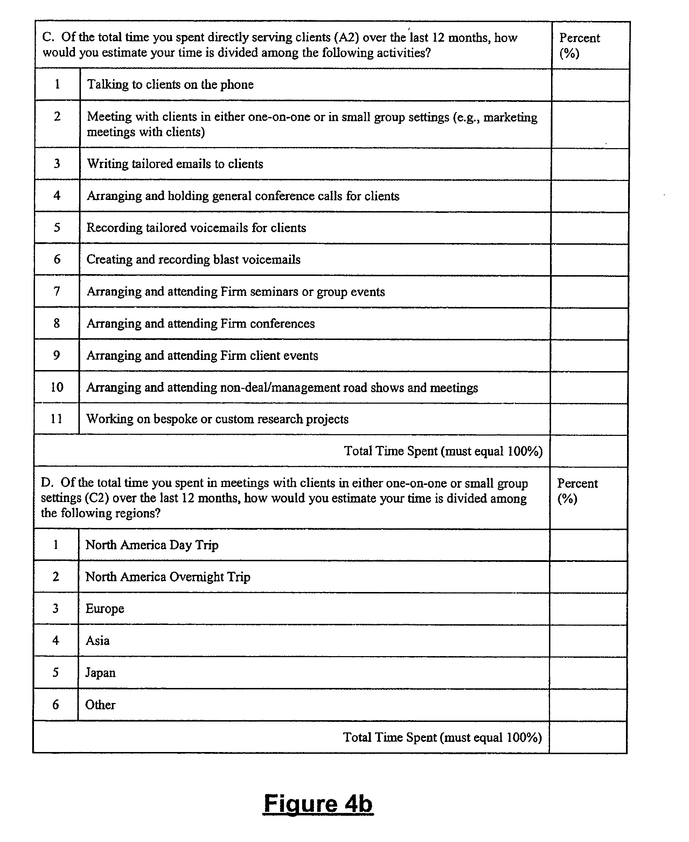

As shown in Figure 4b, the survey may further ask the analysts and other analysis providers to break down the time they spent directly servicing clients into several activities, including some client-touches. For example, the survey may ask the analysts what percentage of their time, of the time they spend directly servicing clients, is devoted to the activities of talking to clients on the phone, meeting with clients (e.g., either one-to-one or in small groups), writing tailored emails to clients, arranging and holding general conference calls with clients, recording tailored voicemails for clients, arranging and attending seminars or group events, arranging and attending conferences, arranging and attending client events, arranging and attending non-deal/management road shows and meetings, and working on bespoke or custom research projects.

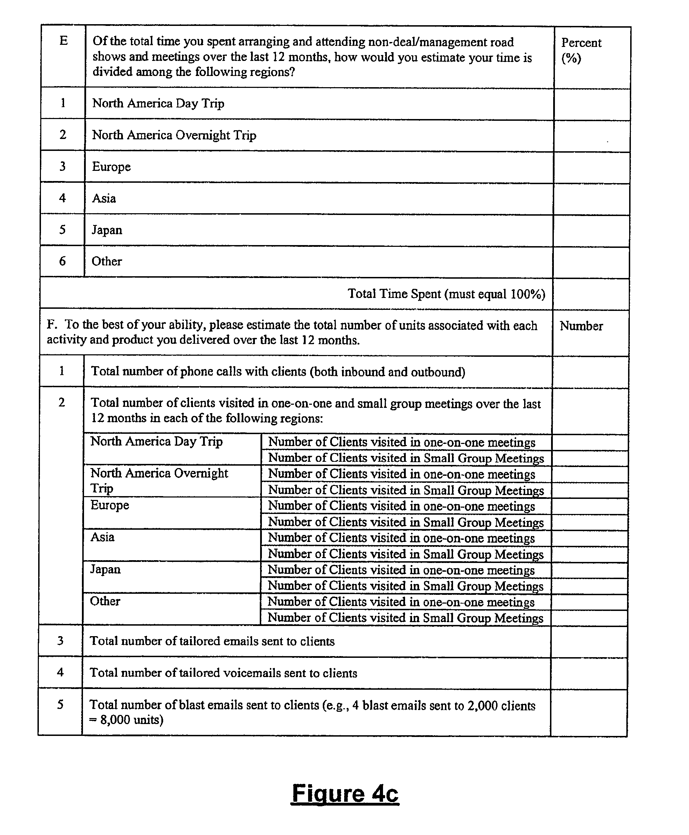

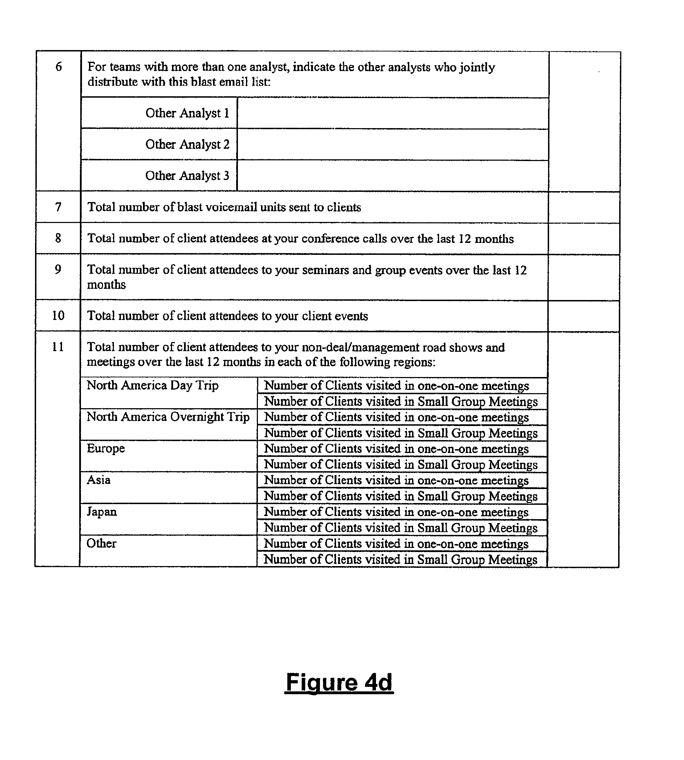

In addition, as shown in Figure 4b, the survey may ask the analysts to estimate how much time, of their time spent in meetings with clients in either one-on-one or small group settings over the specified time period (e.g., twelve months), was spent among in meetings in certain geographic regions. Similarly, as shown in Figure 4c, the survey may ask the analysts to estimate how much time, of their time spent in arranging and attending non-deal/management road shows over the specified time period, was spent arranging and attending such meetings in certain geographic regions.

Further, as shown in Figures 4c and 4d, the survey may ask how many such meetings the analyst attended and how many clients attended such meetings. Additionally, as shown in Figures 4c and 4d, the survey may ask the analysts to estimate how many of certain types of client touches the analyst had, such as tailored emails and voice mails, the number and recipients of blast emaiis and voicemaiis, client attendees at conferences, seminars and other client events, etc. In this way, the number of such touches (including a client at a meeting) and the cost of such touches (related to the cost of the analyst's time for arranging and attending the meetings) can be determined. The survey may be as detailed as necessary to arrive at an estimate of the number of client touches and the expense of analysts and other analysis providers for such touches.

Based on this information, referring to Figure 3b, at step 42, the analysts' and other analysis providers' time related to particular client touches can be allocated to those touches. For example, the time spent by analysts on the phone with clients can be allocated to the cost of client phone calls. Similarly, the time spent writing tailored emails can be allocated to the cost of providing tailored emails, and so on.

At step 44, the cost of such analyst time allocations for each client touch type may be determined or estimated. The cost may determined by multiplying a value related to the analysts' and other analysis providers' fully-loaded compensation and other expenses (e.g., insurance, office space, computer, support, insurance, etc.) times the time spent on the particular client touch type. According to various embodiments, an average compensation value for all analysts and analysis providers may be used. According to other variations, different average compensation values may be used for analysts, research associates, economists, strategists and accountants, respectively. In addition, according to still other implementations, the actual compensation of the individual analysts and analysis providers may be used. That is, for example, if Analyst A spent 5% of her time writing tailored emails to clients and has an associated cost of $S (including fully-loaded compensation plus expenses), the cost of Analyst A to write the tailored emails may be estimated as 0.05 x (number of hours worked) x $S.

To track the costs or expenses associated with analysts, all costs related to the analysts are put in a cost code tied to the respective analyst or associated analyst team. The related costs may include, for example, benefits, office space, support, computer equipment, security, etc. These costs are allocated to each touch category based on the time that the analyst providers spend on activities related to the touch categories.

At step 46, the cost of time spent by analysts and other analysis providers doing research may be estimated. This may be done in order that the cost of research may be spread across the client touches, as explained further below. The cost of research may be determined by multiplying the time spent on research times an associated cost for the analysts' time (including full-loaded compensation and related expenses). The time spent on research may be estimated, for example, based on a survey or any other time tracking technique. For the analyst cost, as before, one or a number of average analyst costs may be used, or the actual costs of the analysts and other analysis providers may be used to determine the cost of research.

At step 48, the cost or expense of research may be allocated across the various client touches. The cost of research may be evenly allocated across all of the client-touch types, or it may be allocated on a pro rata basis. That is, for example, the most numerous and/or most time-consuming client touches may be allocated more of the research costs than less numerous or less time-consuming client touches. For example, if published documents (either hardcopy or electronic) account for 80% of client touches, 80% of the cost of research may be allocated to the cost of published documents. For other types of client touches, the allocation may be made based on time consumption; more time consuming client touches may be allocated a greater percentage of the research costs than less time consuming client touches.

Returning to Figure 3a, at step 38, based on the cost information for each client touch type and the number of units of each client touch type, the cost of each client touch unit may be determined. The cost of each client touch type may be determined by adding the various line item costs for the particular client touch type (e.g., direct labor costs, support costs, etc.), as determined previously. In this way, for example, the average cost of an analyst (or other analysis provider) telephone call with a client may be calculated (on a per-call or per-minute basis), as may the average cost of a one-to-one or small group meeting (including a breakdown by geographic region), the average cost of tailored emails and voicemails, blast emails and voicemails, bespoke or custom research projects, conference calls, conferences, seminars and other client events, hardcopy and electronic documents, web casts, etc. Then, at step 39, the standard cost per client touch unit is allocated to clients based on the clients' consumption of touches.

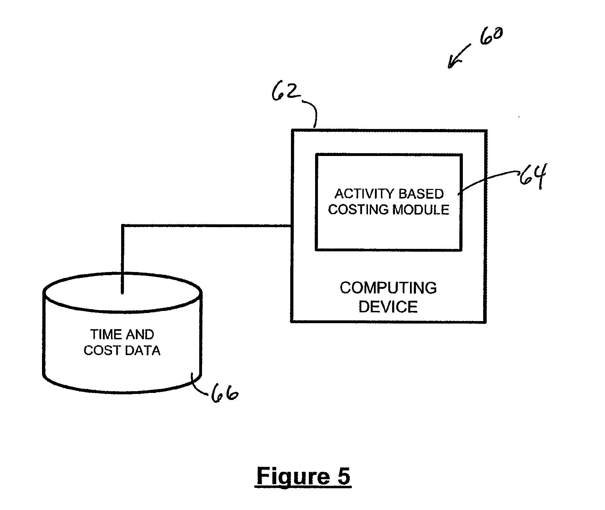

Figure 5 is a diagram of a system 60 for computing the cost per unit for the client touches according to various embodiments of the present invention. The system 60 includes a computing device 62, which includes an activity based costing module 64. The activity based costing module 64 may be implemented as software code to be executed by a processor (not shown) of the computing device 62 using any suitable computer language, such as, for example, Java, C, C++, or Perl using, for example, conventional or object-oriented techniques. The software code may be stored as a series of instructions or commands on a computer-readable medium, such as a random access memory (RAM), a read-only memory (ROM), a magnetic medium such as a hard drive or a floppy disk, or an optical medium, such as a CD-ROM. The computing device 62 may be implemented as one or a number of networked computing devices, such as personal computers, laptops, workstations, servers, etc.

A database 66 (or databases) may contain the acquired time and cost data as determined according to the techniques described above. The activity based costing module 64 may calculate the cost per unit of the respective client touches based on the data.

Figure 6 is a diagram of a client touch tracking system 70 that may be used to track consumption by clients of client touches produced by the equity research department according to various embodiments. The client touch tracking system 70 may be a computerized tracking system that tracks (e.g., counts) the number and type of touches consumed by clients based on input from other systems. For example, the client tracking system 70 may be in communication with an email meter 72 that tracks email sent by the equity research department to clients. The email meter 72 may interface with the email system of the equity research department and, based on the domain name extension of the sent emails, determine which emails where sent to clients and by whom. If sent to a mass-mailing list, it may be assumed that the email was a blast email. If sent to one or a few parties, it may be assumed that the email was a tailored email. If the email was sent by the publishing department, it may be assumed that the email included an electronic research publication, for example.

Also, the tracking system 70 may be in communication with a telephone tracking system 74 that may track phone calls made and received by the analysis providers. The telephone tracking system 74 may track the calling parties and the length of the call. Based on the number of recipients, it may be determined whether the call was a blast voicemail or a tailored voicemail, for example. Similarly, a conference tracking system 76 may track telephone and/or videoconferences conducted by the analysis providers, including the participants, length and medium.

An electronic mailing label system 78 may track production of electronic mail labels. From this data, the number and recipients of hardcopy research publications may be determined. Also, a calendar tracking system 80 may track time entries of the analysis providers to determine, for example, time spent by the analysis providers performing research, attending road shows or conferences, etc. The data from these tracking systems may also be used in conjunction with survey data to help determine the number of client touches produced.

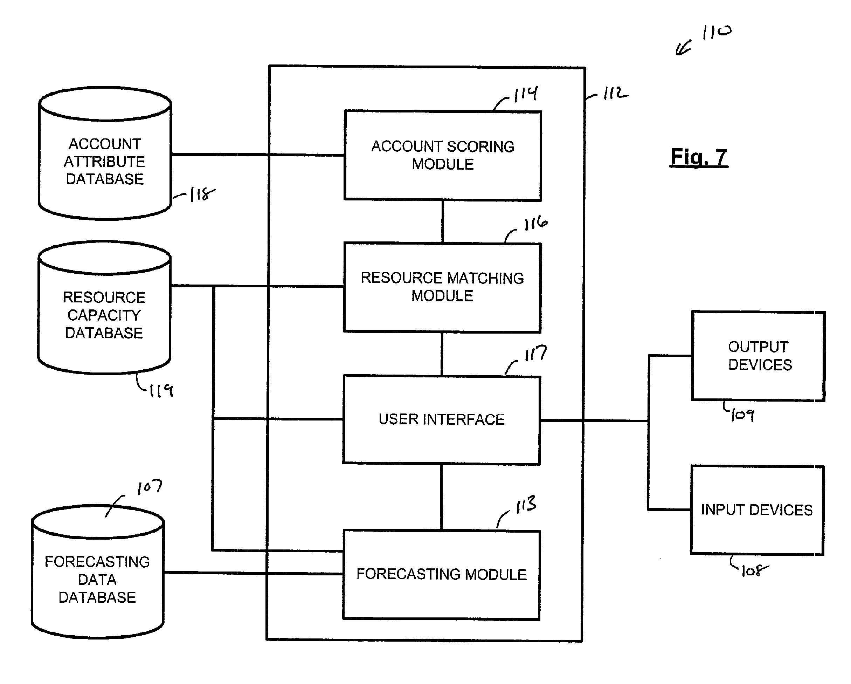

According to another aspect, as shown in Figure 7, the present invention is directed to a system 110 that may be used for matching scarce or limited resources of a supplier of securities research (e.g., equities and/or debt securities research) to consumers of the research. For purposes of the description to follow, the supplier of the securities research is sometimes referred to as a "sell-side firm" or as the "securities research department." The sell-side firm may be, for example, a brokerage or investment house, or an independent research firm. The consumer of the securities research may be an institutional investor, such as a pension fund, a mutual fund, or a hedge fund, or any other type of buy-side firm. The consumer of securities research is sometimes referred to herein as a "client" or "account" of the sell-side firm supplying the securities research, or as a "buy-side firm."

According to various embodiments, the system 110 includes a computing device 112 comprising a number of modules. For example, as illustrated in Figure 7, the computing device 112 may include an account scoring module 114, a resource matching module 116, a forecasting module 113, and a user interface 117. The modules 113, 114, 116, 117 may be implemented as software code to be executed by a processor (not shown) of the computing device 112 using any suitable computer language, such as, for example, Java, C, C++, or Perl, etc., using, for example, conventional or object-oriented techniques. The software code may be stored as a series of instructions or commands on a computer-readable medium, such as a random access memory (RAM), a read-only memory (ROM), a magnetic medium such as a hard drive or a floppy disk, or an optical medium, such as a CD-ROM. The computing device 112 may be implemented as one or a number of networked computing devices, such as personal computers, laptops, workstations, servers, etc.

The account scoring module 114 may generate a score (the "service score") for accounts of the securities research department based on one or more attributes. The service scores may be used, for example, to rank the value of an account to the sell-side firm relative to other accounts that do business with the sell-side firm. The scores, according to various embodiments, may consist of the weighted average percentiles that each account scores in each of the attributes that are included in computing the score and the relative weights of each attribute and category (e.g., cluster of attributes). Attributes can be, for example, quantitative or qualitative factors, but each factor is preferably translated to a quantitative form. For example, a qualitative factor may be translated using a scale of one (I) to one hundred (100) to assess how much the account exhibits the particular factor with one (1) being very little and one hundred (100) being very much. The account attribute data may be stored in an account attribute database 118.

The resource matching module 116 may, according to various embodiments, distribute an arbitrary number (such as 100,000, for example) of points ("preference points") to the accounts based on the service scores of the respective accounts, as determined by the account scoring module 114. Accounts may receive preference points in direct proportion to their share of all service score points given to accounts by the account scoring module 114, as described in more detail below. A percentage of the total preference points for each account may then be allocated to specific resources of the securities research department as a bid or other quantitative indication of interest by the account for that resource. The resource matching module 116 may then match the resources of the securities research department to the accounts based on the bids, as described further below. The inventory of resources may be stored in a resource capacity database 119.

The user interface 117, as described in more detail below, may allow a user of the system 110, via input devices 108 (such as a keyboard or mouse) and output devices 109 (such as a display monitor) to, for example, set the weightings of the attributes and categories of the scoring scenario, define the resource inventory (e.g., analyst-contact relationships), project revenues from accounts based on the results of the resource matching module 116, etc.

The forecasting module 113 may allow the user of the system to estimate the economic impact to the research department based on various resource allocation decisions, as described in more detail below.

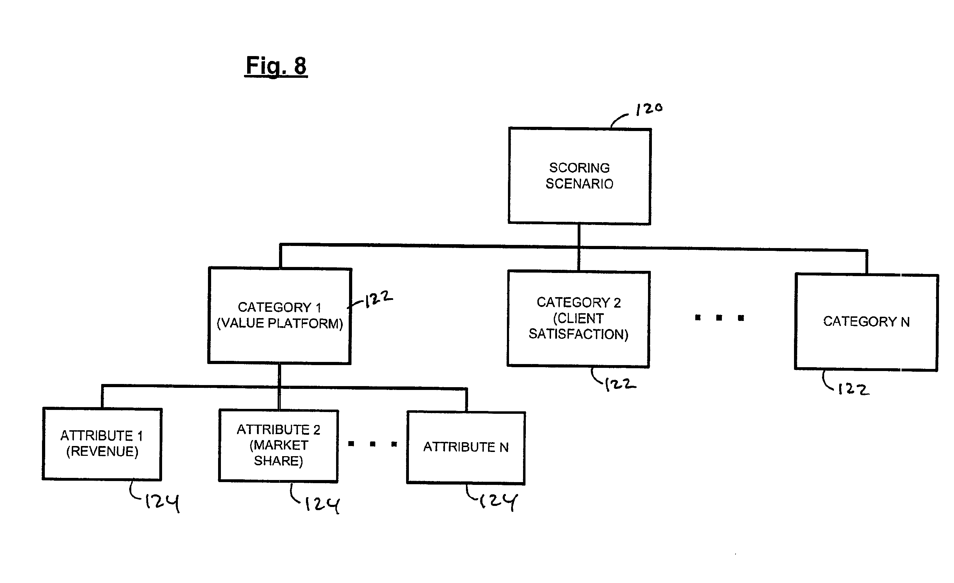

Figure 8 is a diagram of a scoring scenario for the account scoring module 114 according to various embodiments of the present invention. As can be seen in Figure 8, the scoring scenario may be represented as a hierarchical tree. The scoring scenario 120 may include at least one category 122. The number of categories 122 may be determined by the user of the system, e.g., managers or other persons associated with the department. Each category 122 may be weighted as a percentage of how important the category is in determining the value of accounts to the user (i.e., firm). The sum of all category weightings preferably equals 100%. Examples of categories include value platform, client satisfaction, profitability of the account for the sell-side firm, potential of the account, the broker vote, etc. The "broker vote" is a voting survey among large institutional investors in which the institutional investors rank the analysts from various research firms in different market sectors.

Each category 122 may comprise one or more attributes 124. Each attribute 124 may also be weighted as a percentage of how important the attribute is in determining the value of accounts to the user. The sum of all attribute weightings in a category preferably equals 100%. For a value platform category, for example, the attributes may include revenue to the sell-side firm from the account, market share of the sell-side firm for that account, etc. A research department's market share may be determined or estimated by third parties, such as McLagan Partners which tally trading slips.

If information for a particular account in an attribute or category is unavailable, the account scoring module 14 may score the accounts in such a way that the lack of information does not help or hurt the account's overall score, for example. To do so, when calculating an account's overall score, the account scoring module 14 preferably uses the attributes and categories where data is available, and normalizes them by dividing each available attribute or category weight by the sum of all available attribute or category weights. For example, assume a category has three attributes with the following percentage weightings:

| Attribute 1 | 80% |
| Attribute 2 | 10% |
| Attribute 3 | 10% |

If data were only available for Attributes 1 and 2, these attributes would then be weighted as 88.9% for Attribute 1 (computed as 80%/(80% + 10%) and 11.1% for Attribute 2 (computed as 10%/(80% + 10%). Similarly, if a scoring scenario had three categories weighted 50%-30%-20%, and data were only available for the 50% and 30% categories, the two categories for which data were available may be weighted as 62.5% and 37.5%, respectively.

The account scoring module 114, as mentioned above, may generate a service score for the accounts based on a weighted average percentile of each account's score for each attribute and category. For example, with reference to the scoring scenario of Figure 8, a particular account may be assigned a percentile score for each attribute/category in the scoring scenario. An account's percentile for an attribute/category may be computed as:

$$percentile = \text{Integer}\left(\frac{Rank - 1}{AccountCount/100} + 1\right)$$

where Rank is the account's rank for the particular attribute/category and AccountCount is the number of the account in the ranking. For example, if an account's rank for a particular attribute/category is 34th out of 500 accounts, the percentile for the account would be seven (7). The account scoring module 14 may compute the percentile based on available data or retrieve the percentile for each attribute/category for each account from the account attribute database 18. According to other embodiments, rather than evenly spreading the percentile rankings of the accounts across the scoring range, the rankings of the accounts may reflect the relative value of the account for that attribute/category. For example, if the attribute is revenue to the firm and there are one hundred accounts, and the revenue for one particular is account is twice the revenue of any of the other ninety-nine accounts, that account would receive a score of one-hundred and all of the other accounts would have a score of fifty or less, rather than giving the account that is second in revenue a score of ninety-nine despite the fact that its revenue is half the revenue of the top account.

The resource capacity database 119 may list the resources of the securities research department that need to be allocated to the accounts, as well as the available capacity (e.g., inventory) for each resource. For example, if the resource is analyst-contact relationships, then the database 119 may store the specific analysts of the securities research department that are available for accounts and the total number of relationships that each analyst can maintain at a given time with contacts for the various accounts of the research department (e.g., fifty analyst-contact relationships for an analyst). Each resource element can have its own capacity limit. For example, one analyst may be able to maintain fifty relationships, while another may be able to maintain seventy, etc., depending on the experience and capabilities of the analyst.

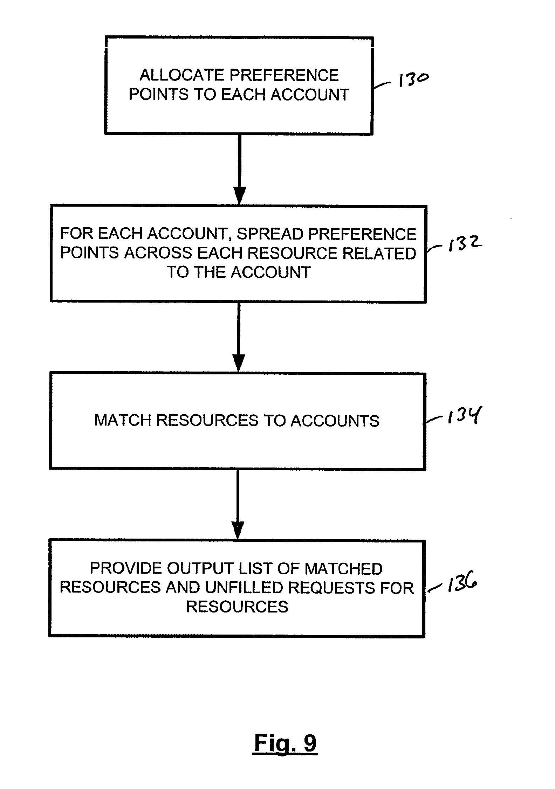

Figure 9 is a diagram of the process flow of the resource matching module 116 according to various embodiments of the present invention. At step 130, the resource matching module 116 may distribute a predetermined, arbitrary number of preference points (e.g., 100,000 preference points) across each account for bidding on resources of the securities research department of interest to the particular account. The resource matching module 116 may distribute the preference points among the various accounts based on the respective service scores of the accounts, as determined by the account scoring module 114. The accounts may receive points in direct proportion to their share of all service score points. For example, the resource matching module 116 may determine the number of preference points to be awarded to a particular account according to the following calculation:

$$\text{Preference Points}_i = \frac{100,000 \times \text{Service Score}_i}{\sum_{n=1}^{N} \text{ServiceScore}_n}$$

where Preference Points$_i$ is the amount of preference points awarded to account $i$, Service Score $i$ is the service score for account $i$, there are $N$ accounts, and 100,000 preference points are used.

Next, at step 132, the preference points for each account are spread across the resources to be matched for the account. For example, if the resources to be matched are analyst-contact relationships, each analyst may have a Point Price indicative of the value of a relationship with the particular analyst for each account. The preference points for each account may be spread across the analysts according to following calculation:

$$\text{Pref Points per Analyst-Contact Relationship} = \frac{\text{Pref Points} * \text{Point Price for Analyst-Contact Relationship}}{\text{Sum of all Point Prices for all Relationships Related to Account}}.$$

A default table of point prices can be used to populate the accounts' initial bids for analyst-contact relationships. Users are preferably able to make changes to the default table values to reflect their knowledge of an account's actual preferences. An analysts point price may depend upon the analyst's popularity and the importance of the industry sector covered by the analyst.

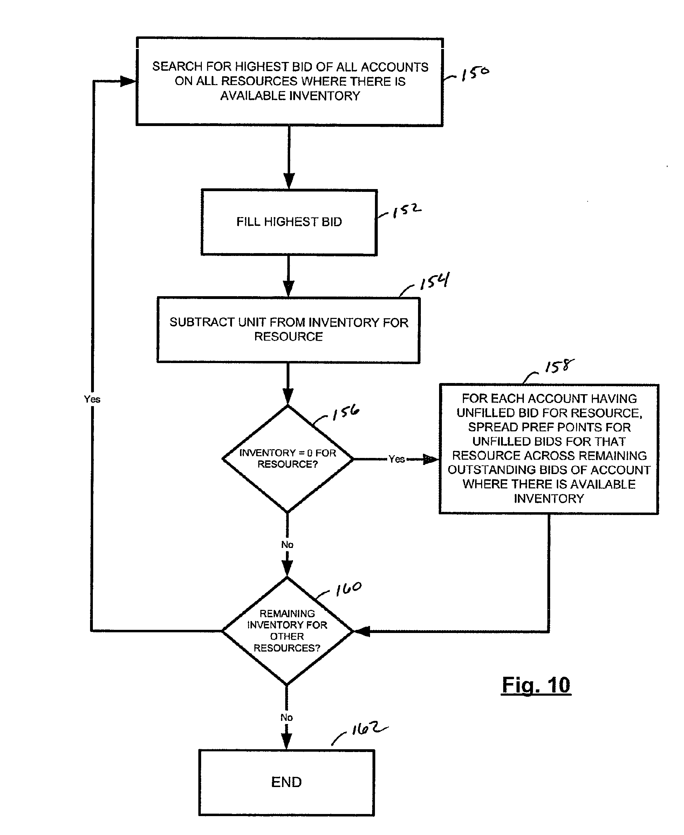

Next, at step 134, the resource matching module 116 may match the resources to the various accounts. The resource matching module 116 may perform the matching process of step 134 according to the process flow of Figure 10 according to various embodiments of the present invention. Referring to Figure 10, at step 150, the resource matching module 116 may search for the highest bid for all of the accounts on all of the resources where there is available inventory (e.g., analyst-contact relationships). At step 152, the resource matching module 116 may fill the highest bid and, at step 154, subtract the unit corresponding to the filled bid from the available inventory for that resource. For example, if Account A has a bid of X for an analyst-contact relationship with Analyst Y, and $X$ is the highest bid on all available resources, then Account A's bid for the analyst-contact relationship with Analyst Y would be filled, and the number of available analyst-contact relationships for Analyst Y would be reduced by one.

Next, at step 156, the resource matching module 116 may determine if there is available remaining inventory for the resource. That is, the resource matching module 116 may determine if the decrement at step 154 reduced the available inventory for the particular resource to zero. If there is no more available inventory for the resource, the process may advance to step 158, where the resource matching module 116, for each account having unfilled bids for the unavailable resource, may spread the preference points for the unfilled bids across remaining outstanding bids of the account where there is available inventory. According to various embodiments, the preference points for the unfilled bids for the unavailable resource may be spread across the outstanding bids of the account in proportion to the account's outstanding preference point bids for resources.

Next, at step 160, the resource matching module 116 may determine if there is remaining inventory for any of the resources. If so, the process may return to step 150, where the process of matching bids to available resources may be repeated until there is no remaining inventory for each of the resources. When no inventory remains, or there are no unfulfilled bids (which is unlikely), the process may end at step 162.

Returning to Figure 9, following the matching of the resources to the accounts at step 134, the process flow of the resource matching module 116 may advance to step 136, where the resource matching module 116 may provide an output list of matched resources to each account (i.e., list of filled orders) as well as a list of unfilled requests for resources.

Returning to Figure 7, the user interface 117 may, for example, allow the user of the system 110 to establish the criteria for the scoring scenario. The user interface 117 may display a number of screens for the user on a monitor that the user may complete to, for example, define the scoring scenario(s), define the inventory, specify the resources that are important to a particular account, etc. The user may interact with the user interface 117 via input and output devices 108, 109 locally connected to the system 110 or remotely connected to the system via, for example, a data network such as a LAN.

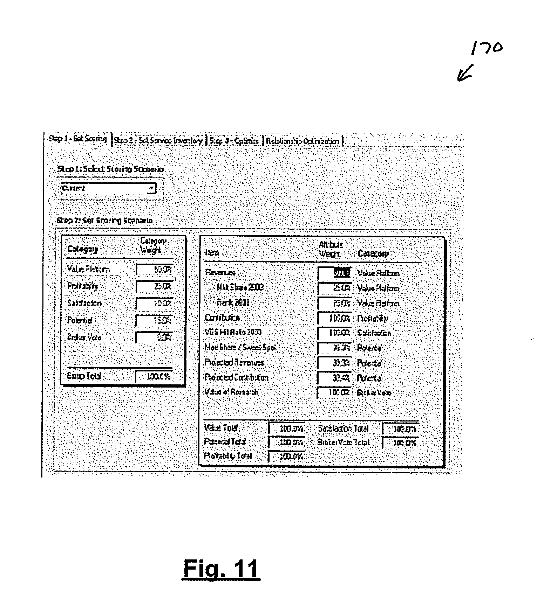

Figure 11 is a screen shot 170 that the user interface 117 may provide to the user through which the user may define the scoring scenario according to various embodiments. In field 172, for example, the user may name the scoring scenario. In field 174, the user may specify the categories of the scoring scenario (see Figure 8) and specify the percentage weights for each category. In field 176, the user may specify the attributes for each category and the percentage weights for each attribute. In the illustrated example, the sum of the percentage weights for each category equals 100%, as does the sum of the percentage weights for each attribute for each of the categories.

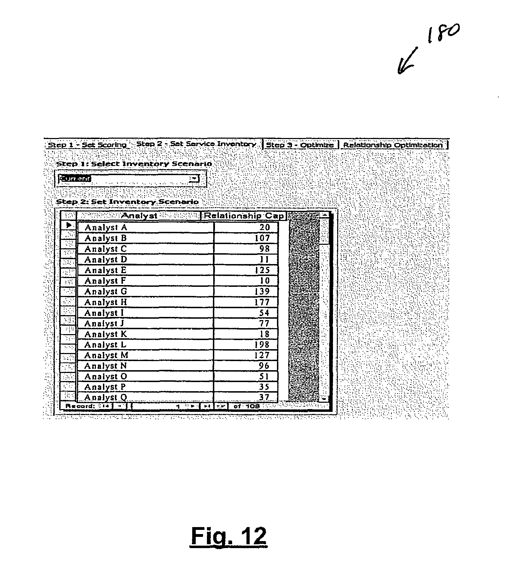

Figure 12 is a screen shot 180 that the user interface 117 may provide to the user through which the use may define the inventory levels of the resources to be allocated. For an application where the resources are analyst-contact relationships, in field 182 the user may specify the different analysts and the total number of relationships that each analyst can maintain at a given time.

In a similar way, the user interface 117 may also provide the user with an opportunity to review the list of assignments and unfilled bids, and make changes to the list for various reasons, such as correcting perceived inequities in the assignments. Also, the system 110 may allow the user to create and save various scenarios, such as for different scoring scenarios, inventory capacities and account preferences.

The forecasting module 113 may be in communication with a forecasting data database 107 and allow a user of the system to estimate the economic impact of various resource allocation decisions. For example, based on data stored in the database 107 regarding the cost of certain analyst-contact relationships, the user may determine the cost of increasing or decreasing the number of relationships allocated to a particular client. Based on knowledge about how such changes would affect the market share of the sell-side firm of the client's total street spend, the benefit of increasing or decreasing the relationships could be evaluated.

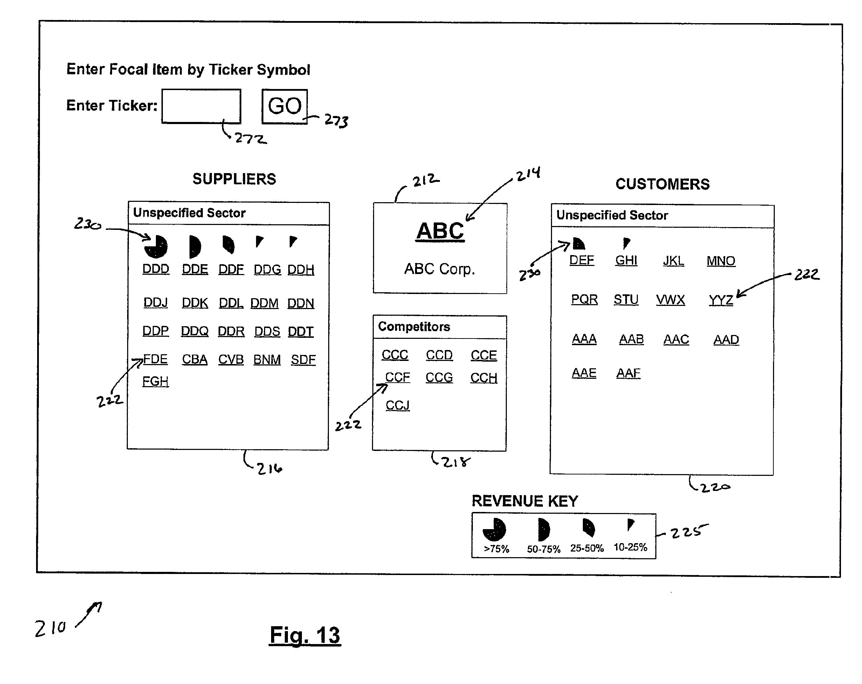

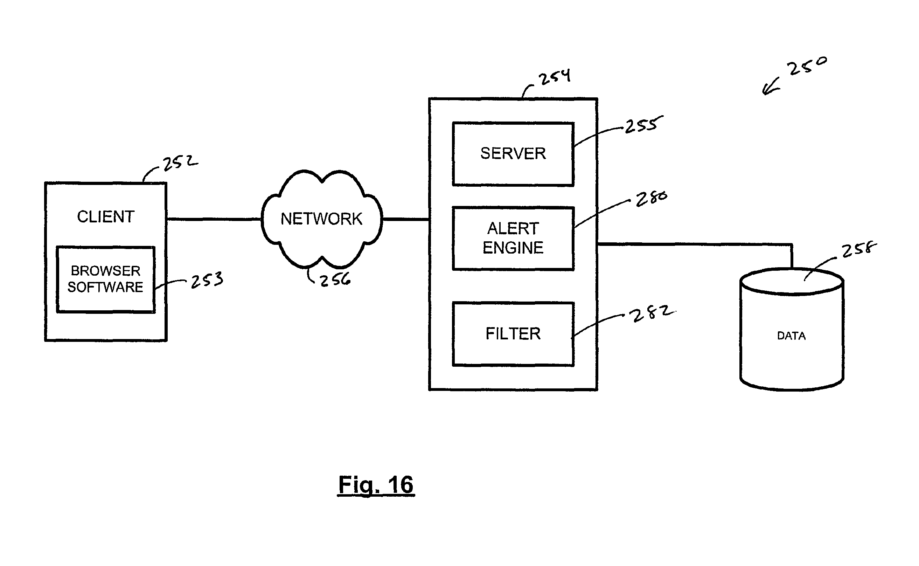

According to yet another aspect, the present invention is directed to a user interface and a system for providing the use interface. Figure 13 is a diagram of an interactive user interface 210 according to various embodiments of the present invention. The user may be presented with the interface 210, as described further below in connection with Figure 16, using a computing device (not shown) having a monitor and web browsing software to display the interface 210 based on pages from a server.

As can be seen in the illustrated embodiment of Figure 13, the interface 210 includes a field 212 positioned toward the center of the interface 210 and which is populated with an item 214. The item 214 may be, for example, an identification of a business entity, such as the stock trading symbol for the business. The user may enter the information for the item 214 or may select it in response to a search query. According to other variations, the item 214 may be, for example, a parameter, such as an economic indicator, including CPI, GNP, etc.

The interface also includes additional fields 216, 218, 220. These additional fields 216, 218, 220 may list items 222 that are related to the item 214 in the field 212. The items 222 may also be an identification of a business entity, such as the stock trading symbol for the business. Because the items 222 listed in the fields 216, 218, 220 are related to the item 214 in the field, the item 214 is sometimes referred to hereinafter as the "focal item."

For an interface 210 where the focal item 214 identifies a business entity, the additional fields 216, 218, 220 may list, for example, suppliers, competitors and customers, respectively, of the focal item 214. According to other embodiments, the interface 210 may include more or fewer fields listing items related to the focal item. Additional fields that may be used, for example, are fields that list creditors, debtors, joint venture partners, etc. of the focal item 214.

Different parameters may be used to determine the items 222 listed in the additional fields 216, 218, 220. For example, according to one embodiment, suppliers and customers of the focal item 214 may be determined based on revenue. That is, for example, each of the items 222 listed in supplier's field 216 may indicate companies that derive a threshold amount (such as 5%) of their revenue through sales to the focal item 214. Similarly, the focal item 214 may derive a threshold amount (such as 5%) of its revenues through sales to companies indicated by the items 222 listed in the customer's field 220. The competitor's field 218 may list items 222 that are indicative of companies that compete with the focal item 214 in the marketplace. Although Figure 13 uses the parameter of revenue to determine the items to be listed in the supplier's and customer's fields 216, 220, other variations of the interface 210 may be different parameters such as, for example, price-to-earnings ratio, inventory level, debt-to-equity ratio, etc.

Certain of the items 222 (that is, all of the items 222 or less than all of the items 222) in the additional fields 216, 218, 220 may further have associated indicia of the quantity of the parameter defining the relationships. For example, where the parameter is revenue, as shown in the example of Figure 13, certain of the items 222 in the supplier's field 216 may have associated indicia 230 indicative of how much revenue the items 222 derive from sales to the focal item 214. The indicia 230 may be, for example, a number, a graphical representation and/or a color-coded representation. In Figure 13, graphical representations, specifically pie slices, are used as the indicia 230. For example, the interface 210 may include a key 225 showing the meaning of, for example, the graphical and/or color-coded representations. With reference to the key 225 in Figure 13, company DDD may receive greater than 75% of its revenue from ABC Corp. (the focal item 214), company DDE may receive 50-75% of its revenue from ABC Corp., company DDF may receive 25-50% of its revenue from ABC Corp., and companies DDG and DDH may receive 10-25% of their revenue from ABC Corp. The companies indicated by the other items 222 in field 216 (such as DDJ, DDK, etc.) may receive less than 10% of their revenue from ABC in this example. According to various embodiments, the pie slices may be of different colors to provide a more perspicuous indication of the relationship.

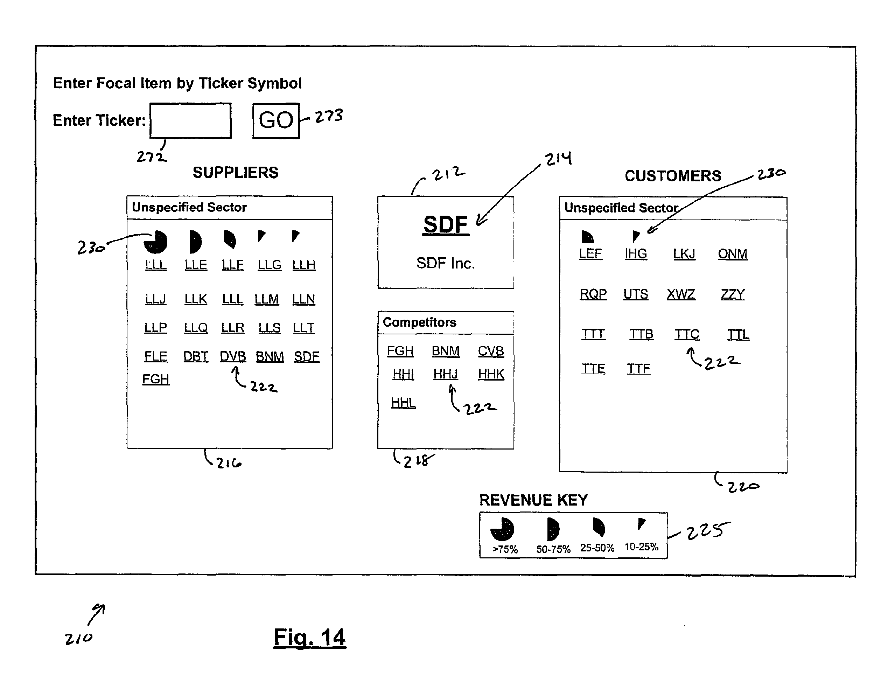

Certain of the items 222 may contain hyperlinks that, when activated by the user, generate a new display with the item 222 corresponding to the activated hyperlink in the field 212 as the new focal item 214. The additional fields 216, 218, 220 would then be populated with items appropriately related to the new focal item 214. For example, with reference to Figure 13, if the user activated the hyperlink for supplier "SDF," a new display would be generated with "SDF" in the field 212 as the new focal item 214, with the fields 216, 18, 220 listing suppliers, competitors and customers of the company corresponding to the symbol "SDF," respectively, as shown in Figure 14.

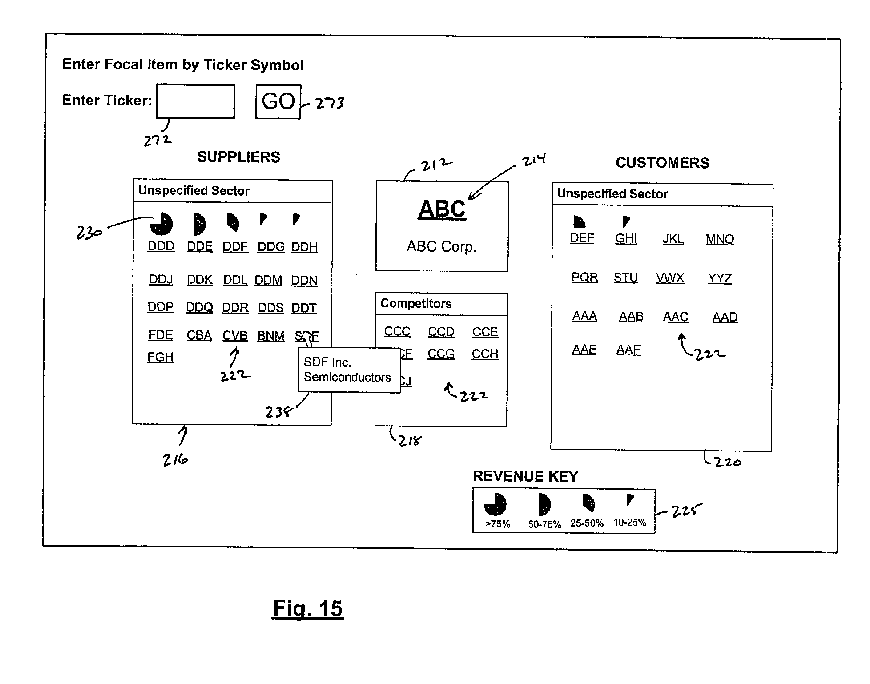

In addition, certain of the items 222 may have an associated mouseover, such that when the user passes the cursor 236 near the item 222 on the display 210, a display window 238 containing additional information about the company indicated by the item 222 is displayed to the user, such as shown in Figure 15. The additional information may include, for example, the full name of the company, its industry sector(s), its market capitalization, etc.

Also, as illustrated in Figures 13-15, the user interface 210 may include a focal item input field 272 where the user could type in an identifier for new focal item. For example, according to one embodiment, the identifier could be the stock trading symbol for a company or an abbreviation for an economic indicator (such as GNP, etc.). In this way, rather than activating one of the hyperlinks for one of the items 222 in one of the fields 216, 218 or 220 to be the new focal item, the user could instead type in the symbol for the new focal item in the field 272. When the user clicks on the activation button 273 or hits the "Enter" key on its keyboard, a new page would be displayed for the user with the new focal item 214 in the field 212 and with, for example, the suppliers, competitors and customers of the new focal item 214 listed in the fields 216, 218, 220 respectively.

As mentioned previously, the focal item 214 may be an economic parameter, such as GNP, CPI, etc. When the focal item 214 is such an economic parameter, one of the additional fields 216, 218, 220 may list items 222 representing companies that are heavily affected by that particular economic parameter. For example, the additional field may include a list of companies whose stock price is known to change in response to changes in the particular economic indicator.

In this way, users may interactively, quickly and perspicuously navigate through a company's supply chain and see key interdependencies and relationships between the spectrum of participants. For example, the user could navigate through three or more derivatives up, down or across a supply chain quickly to discern the impact of market moves on players several orders down or upstream. With reference to the example of Figure 13, the user may quickly discern that company DDD (in field 216) derives a significant portion of its revenues from ABC Corp. (the focal item 214). Thus, for example, if ABC Corp. happened to announce that it was entering bankruptcy, the user would know immediately that the continued revenue stream of company DDD may be impaired. This is but one example of the type of information, critically important to investors, that could be discerned using an interactive user interface as described herein.

The interactive user interface 210 may be implemented, in various embodiments, in a web environment. Figure 16 is a diagram of such a system 250 according to various embodiments. The user may view the interface 210 at a client device 252, which may include web browser software 253 for displaying web pages. The client device 252 may be any type of device capable of receiving, rendering and displaying web pages such as, for example, a portable computer (PC), a laptop computer, a workstation, a web-enabled telephone, etc. The interactive user interface 210 may be part of a web page served to the client device 252 from a host computing device 254 (referred to hereinafter as the "host") through a network 256. The host 254, which is shown as a single device in Figure 16 but which may be embodied as a series of networked computing devices, may include a server 255 for generating the web pages of the interface 210 based on data stored in a database 258. The server 255 may serve the generated web pages via the network 256 to the client device 252.

According to various embodiments, the database 258 may include model data that is tagged and extracted from numerous analysts' models of companies, but publicly traded and privately held. This data may be processed to gather the customer-supplier relationships, etc. to be shown on the interactive interface 210. The database 258 may utilize XBRL (Extensible Business Reporting Language) data. The data may also be validated. In addition, data from other sources may be included in the database 258. Such additional sources include SEC data (e.g., Edgar Online data) and data from subscription data services. The data from these additional data sources may also be validated.

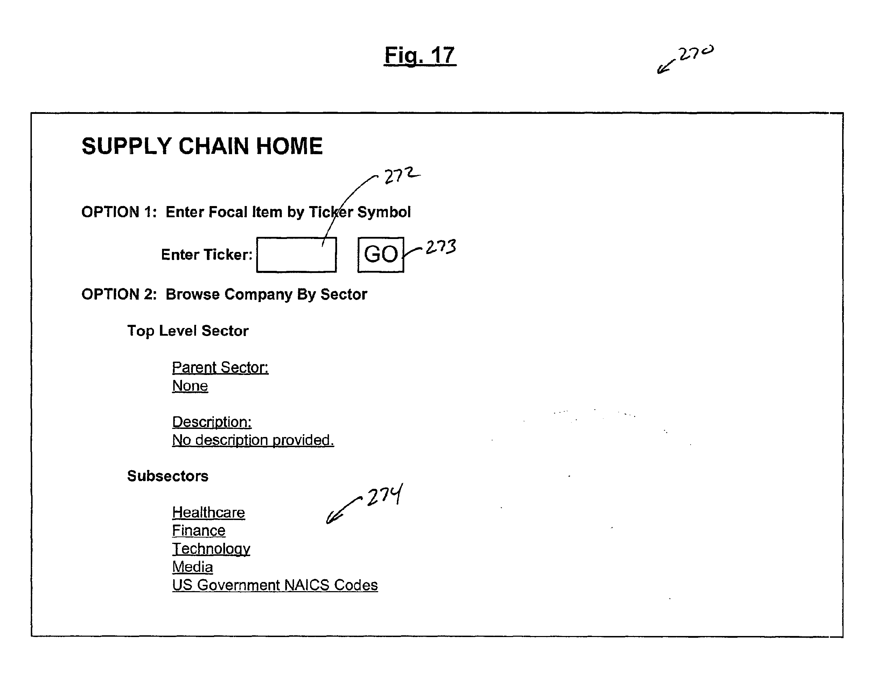

As mentioned previously, the user may enter the focal item 214 (see Figure 13), or it may select the focal item in response to a search query or a drill down through a hierarchy of industry sector-related folders. Figure 17 illustrates an example of an interactive user interface 270 through which a user may enter the focal item 214 (see Figure 13) according to various embodiments of the present invention. For the example illustrated in Figure 17, the user may type in the ticker symbol or economic indicator abbreviation for the focal item 214 in the focal item input field 272. Alternatively, the user may drill down through sector folders 274 to enter the focal item 214. Once the focal item is selected, an interactive user interface as shown in Figure 13 may be displayed for the user.

Referring back to Figure 16, the host 254 may also include an alert engine 280 and a filter 282. The alert engine 280 and filter 282 may be implemented as software code to be executed by a processor(s) (not shown) of the host 254 using any type of computer instruction type suitable, such as, for example, Java, C, C++, Visual Basic, etc., using, for example, conventional or object-oriented techniques. The software code may be stored as a series of instructions or commands on a computer readable medium, such as a random access memory (RAM), a read only memory (ROM), a magnetic medium such as a hard drive or a floppy disk, or an optical medium such as a CD-ROM.

The alert engine 280 may receive alerts generated by applications (not shown). The alerts may be messages indicating that some type of predetermined event has occurred. The user, via the client device 252, may set criteria that establish the type of alerts to be generated. For example, the user may set criteria such that if the stock price for a particular company changes by more than 5% during one trading day, an alert is generated. The alert engine 80 may receive the generated alerts and route them to the appropriate users. The alerts may be, for example, messages sent via the network 256 to the user's client device 252.

The filter 282 may filter data from the database 258 to be displayed on the interactive display 210. For example, with reference to Figure 13, field 216 contains a listing of companies that receive revenue through sales to the focal company (focal item 214). Instead of listing every company in the database 258 that is known to receive revenue from the focal company, the filter 282 may filter out all companies that receive less than a threshold percentage (such as 1%, 2%, 5%, etc.) of their revenue from the focal company. Similarly, the filter 282 may filter out companies for the customer field 220 from which the focal company receives less than a threshold percentage of its revenue. According to various embodiments, the user may select the threshold percentage or an administrator of the host 254 may set the threshold values.

Various embodiments of the present invention are also directed to a method of presenting data in an interactive user interface to a user. The method may include displaying a first page with the interactive user interface 210, such as shown in Figure 13, to the user. The page may be served as part of a document served to the user's client device 252 by the server 255 of the host 254 (see Figure 16). The method may also include displaying a second page to the user when one of the hyperlinks contained in any of the fields 216, 218, 220 is activated by the user. In the second page, the item corresponding to the activated hyperlink may be the new focal item 214 in the field 212, as shown in Figure 14. As such, the fields 216, 218, 220 may list items related to the new focal item 214. Further, the items in fields 216, 218, 220 in the second page may also have associated hyperlinks and mouseovers, just like the first page. The user may interactively navigate through the supply chain by continually repeating this process, selecting different items (e.g., companies or economic indicators) to be the new focal item.

**Claims**

1. A system for allocating limited resources of a securities research department to accounts of the department, comprising:

   an account scoring module for generating a score for each account; and
   a resource matching module in communication with the account scoring module for matching the resources of the department to the accounts based on the scores for each account.

2. The system of claim 1, further comprising a forecasting module for estimating the financial impact of resource allocations.

3. The system of claim 1 or 2, wherein the resources include analyst-contact relationships.

4. The system of claims 1, 2 or 3, wherein the account scoring module is for generating the score for each account based on a ranking of the account for at least one category.

5. The system of claim 1, wherein the account scoring module is for generating the score for each account based on a ranking of the account for at least one attribute related to the category.

6. The system of claim 5, wherein the rankings for the attributes include percentile rankings.

7. The system of claim 4, wherein the account scoring module is for generating the score for each account based on a weighted percentage average of rankings of the account for a plurality of attributes for the category.

8. The system of claim 4, wherein the category is selected from the group consisting of value and client satisfaction.

9. The system of claim 4, wherein the account scoring module is for generating the score for each account based on a weighted percentage average of rankings of the account for a plurality of categories.

10. The system of claim 9, wherein the account scoring module is for generating the score for each account based on a ranking of the account for a plurality of attributes related to the categories.

11. The system of claim 10, wherein the account scoring module is for generating the score for each account based on a weighted percentage average of rankings of the account for the plurality of attributes.

12. The system of claim 11, wherein the rankings for the attributes include percentile rankings.

13. The system of claim 11, wherein one of the categories includes value, and the attributes for the value category include at least one of revenue and market share.

14. A computer device comprising an activity based costing module that is programmed to estimate the cost per unit of client touches for an equity research department by:

   allocating costs of support resources of the department over the period of time to the number of client touch types produced by the department over a period of time;
   allocating costs of time of analysis providers of the department over the period of time to the client touch types;
   estimating the cost of per unit of the one or more client touch types by, for each client touch type, dividing the sum of the costs for the client touch type by number of units of the client touch type to create a standard cost per unit for the one or more client touch types; and
   allocating costs to the client based on the consumption of client touches by the client and the corresponding standard cost per unit for the client touch type consumed.

15. The computer device of claim 14, wherein the client touch types include at least one of:

   a phone call with a client;
   a one-to-one meeting with a client;
   a small group meeting including a client;
   a tailored email to a client;
   a tailored voicemail sent a client;
   a custom research project for the client;
   a blast voicemail sent by a client;
   a conference call attended by a client;
   a conference attended by a client;
   a seminar attended by a client;
   a published document received by a client;
   a blast email sent to a client; and
   a web cast sent to a client.

16. The computer device of claim 14 or 15, wherein the analysis providers include at least one of analysts, research associates, strategists, economists and accountants.

17. The computer device of claim 14, 15 or 16, wherein activity based costing module is programmed to allocate the cost of research time spent by the analysis providers over the period of time to the one or more client touch types by evenly allocating the cost of research time spent by the analysis providers over the period of time to the one or more client touch types.

18. The computer device of claim 14, 15 or 16, wherein activity based costing module is programmed to allocate the cost of research time spent by the analysis providers over the period of time to the one or more client touch types by allocating the cost of research time spent by the analysis providers over the period of time to the one or more client touch types on a pro rata basis.

19. A computer device comprising an activity based costing module that is programmed to determine the cost of an equity research department to service a client of the department by:

for each client, calculating a compensation-weighted time spent by the analysts servicing the client over a specified period of time based on the time spent by each analyst of the department servicing the client over the specified period of time; and
for each client, summing the compensation-weighted time spent servicing the client over the specified period of time by each analyst servicing the client over the specified period of time.

20. The computer device of claim 19, wherein the time spent by each analyst servicing the client is determined by an on-line survey of the analysts, wherein the on-line survey asks each analyst to:

estimate time spent collectively servicing a number of listed clients of the department and the time spent collectively servicing non-listed clients of the department over the specified period of time;
categorize the listed clients based on consumption of the analyst's time into one of a number of client-use categories; and
estimate the time spent by the analyst collectively servicing the listed clients for each client-use category over the specified period of time.

21. The computer device of claim 20, wherein the activity based costing module is programmed to calculate the compensation-weighted time spent by each analyst by:

for each analyst, allocating the percentage of time spent servicing listed clients over the specified period of time across each listed client based on the percentage of time that the analyst estimated is spent with each client-use category;
for each analyst, allocating the percentage of time spent with listed clients over the specified period of time across each listed client based on the percentage of time that the analyst estimated is spent servicing the client-use category of the respective clients; and
for each analyst, calculating a compensation-weighted time spent servicing each listed client.

22. The computer device of claim 21, wherein the activity based costing module is programmed to calculate the compensation-weighted time for each analyst by:

calculating a percentage of the compensation that the analyst receives of the total compensation pool; and
multiplying the estimated time that the analyst spent servicing each listed client over the specified period of time by the compensation percentage.

23. A system for providing an interactive user interface to a user, the system comprising:

a server for serving a document containing the interactive user interface via a network to the user, the interactive user interface including:

a first field listing a focal item; and
at least one additional field containing a listing of items related to the focal item, wherein certain of the related items include a hyperiink which, when activated by the user, causes the item corresponding to the activated hyperlink to become a new focal item listed in the first field, such that the at least one additional field transitions to list items related to the new focal item; and

a database in communication with the server for storing data about the items.

24. The system of claim 23, further comprising an alert engine in communication with the database for sending an alert message via the network to the user.

25. The system of claims 23 or 24, wherein certain of the related items in the at least one additional field include indicia of the relation to the focal item.

26. The system of claim 25, wherein the indicia include at least one of a graphical representation and a color-coded representation of the relation to the focal item.

**27.** The system of claims 23, 24, 25 or 26, wherein the focal item includes an identifier for a company.

**28.** The system of claims 23, 24, 25 or 26, wherein the focal item includes the stock trading ticker symbol of the company.

**29.** The system of any one of claims 23 to 28, wherein the listing of related items in a first additional field includes a listing of items identifying companies that are a supplier to the focal item.

**30.** The system of claim 29, wherein the listing of related items in the first additional field includes a listing of items identifying companies that receive a threshold percentage of their revenue through sales to the focal item.

**31.** The system of claim 29, wherein the listing of related items in a second additional field includes a listing of items identifying companies that are a customer of the focal item.

**32.** The system of claim 31, wherein the listing of related items in the second additional field includes a listing of items identifying companies from which the focal item receives a threshold percentage of its revenue.

**33.** The system of claim 31, wherein the listing of related items in a third additional field includes a listing of items identifying companies that are competitors of the focal item.

**34.** The system of claim 25, wherein the listing for certain of the related items includes an associated mouseover such that, when a user maintains a cursor near the item for a sufficient time period, additional information about the listing is presented to the user.

**35.** The system of claim 25, wherein:

the focal item includes one of an identifier for a company and an indentifier of an economic indicator; and the at least one additional field includes:

when the focal item is an identifier for a company, a listing of items identifying companies that are selected from the group consisting of customers, suppliers and competitors of the focal item; and when the focal item is an identifier of an economic indicator, a listing of items identifying companies whose stock price is known to change with changes to the economic indicator.

**36.** The system of claims 23, 24 or 35, wherein the document further includes a focal item input field in which a user may input an identifier for a new focal item.

SURVEY ANALYSTS

- Categorize consumption by tiered clients
- Estimate consumption by each category
- Estimate time spent with tiered vs non-tiered clients

~ 10

FOR EACH ANALAST, SPREAD ESTIMATED PERCENTAGE OF TIME SERVICING TIERED CLIENTS ACROSS EACH CLIENT USE CATEGORY BASED ON ESTIMATED COLLECTIVE CONSUMPTION BY CLIENTS IN EACH CLIENT USE CATEGORY

~ 14

FOR EACH ANALYST, SPREAD PERCENTAGE OF TIME SPENT COLLECTIVELY SERVICING CLIENTS IN EACH CLIENT USE CATEGORY ACROSS THE CLIENTS IN THE RESPECTIVE CLIENT USE CATEGORIES

~ 16

CALCULATE COMPENSATION-WEIGHTED TIME FOR EACH ANALYST FOR EACH CLIENT

~ 18

SUM THE COMP-WEIGHTED TIME PERCENTAGES FOR EACH ANALYST FOR EACH LISTED CLIENT

~ 20

## Figure 1

| Question 1 | | | | |
|---|---|---|---|---|
| Please check the box below that best categorizes clients' use of your time over the last 12 months. | Client Usage of Research ▪ *Heavy* users of your time: client contact at least once every 2 weeks ▪ *Medium* users of your time: client contact at least once every 6 weeks ▪ *Light* users of your time: client contact less than once every 6 weeks | | | |
| Clients | Heavy | Medium | Light | None |
| Client 1 | | | | |
| Client 2 | | | | |
| Client 3 | | | | |
| Client 4 | | | | |
| Client 5 | | | | |
| Client 6 | | | | |
| Client 7 | | | | |
| Client 8 | | | | |
| Client 9 | | | | |
| .    .    . | | | | |
| Client n | | | | |

*— 12*

| Question 2 | | | |
|---|---|---|---|
| For clients listed above with whom you spent time over the last 12 months, how would you estimate your time is divided among the client-use categories? | Percentage (%) of time spent for each client-use category (Must total 100%) | | |
| | Heavy | Medium | Light |
| | | | |

| Question 3 | | |
|---|---|---|
| Of the total time you spent with the equity research department's clients over the last 12 months, how would you estimate your time is spent with listed clients versus non-listed clients? | Percentage (%) of time spent with listed Client (Must total 100%) | |
| | Listed Clients | Non-Listed Clients |
| | | |

## Figure 2

DETERMINE TYPES OF CLIENT TOUCH POINTS

~30

DETERMINE NUMBER OF UNITS OF EACH CLIENT TOUCH

~32

ALLOCATE COSTS OF SUPPORT RESOURCES TO CLIENT TOUCHES

- Allocate costs directly related to particular touches to those touches

- Allocate indirect costs across all touches

~34

ALLOCATE EXPENSES OF ANALYSTS AND OTHER ANALYSIS PROVIDERS TO CLIENT TOUCHES

~36

DETERMINE STANDARD COST OF EACH CLIENT TOUCH UNIT

~38

ALLOCATE COSTS TO CLIENTS BASED ON THEIR CONSUMPTION OF CLIENT TOUCHES

~39

**Figure 3a**

DETERMINE TIME ALLOCATION FOR ANALYSTS AND OTHER ANALYSIS PROVIDERS

40

ALLOCATE TIME RELATED TO PARTICULAR TOUCHES TO THOSE TOUCHES

42

DETERMINE COST OF ANALYSTS' TIME (INCLUDING COMPENSATION AND ALL RELATED COSTS) ALLOCATED TO TOUCHES

44

DETERMINE COST OF ANALYSTS' RESEARCH

46

ALLOCATE COST OF RESEARCH ACROSS TOUCHES

48

**Figure 3b**

| A. Over the last 12 months, how would you estimate your total work time is divided among the following activities? | | Percent (%) |
|---|---|---|
| 1 | Researching and creating research work product | |
| 2 | Directly serving clients | |
| 3 | Working with Research Sales department (excluding time spent with Research Sales spent directly with clients) | |
| 4 | Serving other divisions: Division 1 | |
| 5 | Serving other divisions: Division 2 | |
| 6 | Serving other divisions: Division 3 | |
| 7 | Serving other divisions: Division 4 | |
| | Total Time Spent (must equal 100%) | |
| B. Of the total time you spent researching and creating research work product (A1) over the last 12 months, how would you estimate your time is divided among the following activities? | | Percent (%) |
| 1 | Conducting proprietary research | |
| 2 | Conducting on-going research | |
| 3 | Creating/writing/editing finished documents and end-product for publishing | |
| 4 | Creating webcasts | |
| 5 | Working on models and valuations | |
| | Total Time Spent (must equal 100%) | |

## Figure 4a

| C. Of the total time you spent directly serving clients (A2) over the last 12 months, how would you estimate your time is divided among the following activities? | | Percent (%) |
|---|---|---|
| 1 | Talking to clients on the phone | |
| 2 | Meeting with clients in either one-on-one or in small group settings (e.g., marketing meetings with clients) | |
| 3 | Writing tailored emails to clients | |
| 4 | Arranging and holding general conference calls for clients | |
| 5 | Recording tailored voicemails for clients | |
| 6 | Creating and recording blast voicemails | |
| 7 | Arranging and attending Firm seminars or group events | |
| 8 | Arranging and attending Firm conferences | |
| 9 | Arranging and attending Firm client events | |
| 10 | Arranging and attending non-deal/management road shows and meetings | |
| 11 | Working on bespoke or custom research projects | |
| Total Time Spent (must equal 100%) | | |
| D. Of the total time you spent in meetings with clients in either one-on-one or small group settings (C2) over the last 12 months, how would you estimate your time is divided among the following regions? | | Percent (%) |
| 1 | North America Day Trip | |
| 2 | North America Overnight Trip | |
| 3 | Europe | |
| 4 | Asia | |
| 5 | Japan | |
| 6 | Other | |
| Total Time Spent (must equal 100%) | | |

# Figure 4b

| E | Of the total time you spent arranging and attending non-deal/management road shows and meetings over the last 12 months, how would you estimate your time is divided among the following regions? | Percent (%) |
|---|---|---|
| 1 | North America Day Trip | |
| 2 | North America Overnight Trip | |
| 3 | Europe | |
| 4 | Asia | |
| 5 | Japan | |
| 6 | Other | |
| | Total Time Spent (must equal 100%) | |

| | F. To the best of your ability, please estimate the total number of units associated with each activity and product you delivered over the last 12 months. | | Number |
|---|---|---|---|
| 1 | Total number of phone calls with clients (both inbound and outbound) | | |
| 2 | Total number of clients visited in one-on-one and small group meetings over the last 12 months in each of the following regions: | | |
| | North America Day Trip | Number of Clients visited in one-on-one meetings | |
| | | Number of Clients visited in Small Group Meetings | |
| | North America Overnight Trip | Number of Clients visited in one-on-one meetings | |
| | | Number of Clients visited in Small Group Meetings | |
| | Europe | Number of Clients visited in one-on-one meetings | |
| | | Number of Clients visited in Small Group Meetings | |
| | Asia | Number of Clients visited in one-on-one meetings | |
| | | Number of Clients visited in Small Group Meetings | |
| | Japan | Number of Clients visited in one-on-one meetings | |
| | | Number of Clients visited in Small Group Meetings | |
| | Other | Number of Clients visited in one-on-one meetings | |
| | | Number of Clients visited in Small Group Meetings | |
| 3 | Total number of tailored emails sent to clients | | |
| 4 | Total number of tailored voicemails sent to clients | | |
| 5 | Total number of blast emails sent to clients (e.g., 4 blast emails sent to 2,000 clients = 8,000 units) | | |

## Figure 4c

| 6 | For teams with more than one analyst, indicate the other analysts who jointly distribute with this blast email list: | | |
|---|---|---|---|
| | Other Analyst 1 | | |
| | Other Analyst 2 | | |
| | Other Analyst 3 | | |
| 7 | Total number of blast voicemail units sent to clients | | |
| 8 | Total number of client attendees at your conference calls over the last 12 months | | |
| 9 | Total number of client attendees to your seminars and group events over the last 12 months | | |
| 10 | Total number of client attendees to your client events | | |
| 11 | Total number of client attendees to your non-deal/management road shows and meetings over the last 12 months in each of the following regions: | | |
| | North America Day Trip | Number of Clients visited in one-on-one meetings | |
| | | Number of Clients visited in Small Group Meetings | |
| | North America Overnight Trip | Number of Clients visited in one-on-one meetings | |
| | | Number of Clients visited in Small Group Meetings | |
| | Europe | Number of Clients visited in one-on-one meetings | |
| | | Number of Clients visited in Small Group Meetings | |
| | Asia | Number of Clients visited in one-on-one meetings | |
| | | Number of Clients visited in Small Group Meetings | |
| | Japan | Number of Clients visited in one-on-one meetings | |
| | | Number of Clients visited in Small Group Meetings | |
| | Other | Number of Clients visited in one-on-one meetings | |
| | | Number of Clients visited in Small Group Meetings | |

# Figure 4d

**Figure 5**

# Fig. 6

EMAIL METER 72

TELEPHONE TRACKING SYSTEM 74

CONFERENCE TRACKING SYSTEM 76

70

CLIENT TOUCH TRACKING SYSTEM

ELECTRONIC MAILING LABEL SYSTEM 78

CALENDAR TRACKING SYSTEMS 80

Fig. 7

## Fig. 8

EP 1 600 874 A2

ALLOCATE PREFERENCE
POINTS TO EACH ACCOUNT $\quad$ 130

FOR EACH ACCOUNT, SPREAD PREFERENCE
POINTS ACROSS EACH RESOURCE RELATED
TO THE ACCOUNT $\quad$ 132

MATCH RESOURCES TO ACCOUNTS $\quad$ 134

PROVIDE OUTPUT LIST OF MATCHED
RESOURCES AND UNFILLED REQUESTS FOR
RESOURCES $\quad$ 136

**Fig. 9**

SEARCH FOR HIGHEST BID OF ALL ACCOUNTS ON ALL RESOURCES WHERE THERE IS AVAILABLE INVENTORY — 150

FILL HIGHEST BID — 152

SUBTRACT UNIT FROM INVENTORY FOR RESOURCE — 154

INVENTORY = 0 FOR RESOURCE? — 156

FOR EACH ACCOUNT HAVING UNFILLED BID FOR RESOURCE, SPREAD PREF POINTS FOR UNFILLED BIDS FOR THAT RESOURCE ACROSS REMAINING OUTSTANDING BIDS OF ACCOUNT WHERE THERE IS AVAILABLE INVENTORY — 158

Yes

No

REMAINING INVENTORY FOR OTHER RESOURCES? — 160

Yes

No

END — 162

**Fig. 10**

**Fig. 11**

180

| | Analyst | Relationship Cap | |
|---|---|---|---|

Step 1 - Set Scoring  Step 2 - Set Service Inventory  Step 3 - Optimize  Relationship Optimization

**Step 1: Select Inventory Scenario**

Current

**Step 2: Set Inventory Scenario**

| | Analyst | Relationship Cap | |
|---|---|---|---|
| ▶ | Analyst A | 20 | |
| | Analyst B | 107 | |
| | Analyst C | 98 | |
| | Analyst D | 11 | |
| | Analyst E | 125 | |
| | Analyst F | 10 | |
| | Analyst G | 139 | |
| | Analyst H | 177 | |
| | Analyst I | 54 | |
| | Analyst J | 77 | |
| | Analyst K | 18 | |
| | Analyst L | 198 | |
| | Analyst M | 127 | |
| | Analyst N | 96 | |
| | Analyst O | 51 | |
| | Analyst P | 35 | |
| | Analyst Q | 37 | |

Record: ◄ ◄ │ 1 ► ►I ►* │ of 108

## Fig. 12

Enter Focal Item by Ticker Symbol

Enter Ticker: [ ] [GO] ~273
 272

**SUPPLIERS**    212   214    **CUSTOMERS**

Unspecified Sector

230

DDD  DDE  DDF  DDG  DDH

DDJ  DDK  DDL  DDM  DDN

DDP  DDQ  DDR  DDS  DDT

FDE  CBA  CVB  BNM  SDF

FGH

222

**ABC**

ABC Corp.

230

Competitors

CCC   CCD   CCE

CCF   CCG   CCH

CCJ

222

216   218

Unspecified Sector

DEF   GHI   JKL   MNO

PQR   STU   VWX   YYZ   222

AAA   AAB   AAC   AAD

AAE   AAF

220

**REVENUE KEY**

>75%  50-75%  25-50%  10-25%   225

210

**Fig. 13**

**Enter Focal Item by Ticker Symbol**

**Enter Ticker:** [ ] | GO | — 273

272

**SUPPLIERS**

212    214    **CUSTOMERS**    230

| Unspecified Sector |

230

LLL LLE LLF LLG LLH

LLJ LLK LLL LLM LLN

LLP LLQ LLR LLS LLT

FLE DBT DVB BNM SDF

FGH

222

216

| SDF |

SDF Inc.

| Competitors |

FGH BNM CVB

HHI HHJ HHK

HHL

222

218

| Unspecified Sector |

LEF IHG LKJ ONM

RQP UTS XWZ ZZY

TTT TTB TTC TTL

TTE TTF

222

220

**REVENUE KEY**

>75%  50-75%  25-50%  10-25%  — 225

210

<u>Fig. 14</u>

EP 1 600 874 A2

EP 1 600 874 A2

**Enter Focal Item by Ticker Symbol**

**Enter Ticker:** [ ]   | GO | — 273

272

**SUPPLIERS**                    — 212      — 214                 **CUSTOMERS**

| Unspecified Sector | | | | |
|---|---|---|---|---|
| 230 | | | | |
| DDD | DDE | DDF | DDG | DDH |
| DDJ | DDK | DDL | DDM | DDN |
| DDP | DDQ | DDR | DDS | DDT |
| FDE | CBA | CVB | BNM | SDF |
| FGH | | 222 | | |

238

216

**ABC**

ABC Corp.

**Competitors**

| CCC | CCD | CCE |
|---|---|---|
| CF | CCG | CCH |
| CJ | | |

222

218

SDF Inc.
Semiconductors

| Unspecified Sector | | | |
|---|---|---|---|
| DEF | GHI | JKL | MNO |
| PQR | STU | VWX | YYZ |
| AAA | AAB | AAC | AAD |
| AAE | AAF | | 222 |

220

**REVENUE KEY**

| >75% | 50-75% | 25-50% | 10-25% |
|---|---|---|---|

225

**Fig. 15**

**Fig. 16**

EP 1 600 874 A2

**Fig. 17**

_270_

**SUPPLY CHAIN HOME**

_272_

**OPTION 1: Enter Focal Item by Ticker Symbol**

Enter Ticker: [          ]  [GO] _273_

**OPTION 2: Browse Company By Sector**

**Top Level Sector**

Parent Sector:
None

Description:
No description provided.

**Subsectors**

_274_

Healthcare
Finance
Technology
Media
US Government NAICS Codes

EP 1 600 874 A2